# EUROPEAN PATENT APPLICATION

(11) **EP 4 603 548 A1**
(43) Date of publication of application: **20.08.2025**
(21) Application number: 24157247.8
(22) Date of filing: 13.02.2024
(51) Int. Cl.: C09B 5/62, C09B 67/22

(54) **FLUORESCENT MATERIALS**

(71) Applicant: Iyris Technology Limited, Uckfield, TN22 1SL (GB)
(72) Inventor: ERK, Peter, 67157 Wachenheim an der Weinstrasse (DE); BRYANT, Daniel Thomas James, 23955 THUWAL (SA)
(74) Representative: Eisenführ Speiser

(57) **Abstract**

The present invention primarily relates to a compound of formula (I) as defined herein. The present invention further relates to a mixture comprising or consisting of two or more compounds of formula (I) as defined herein, wherein the mixture comprises compounds of formula (la) and (la') or compounds of formula (lb) and (lb') or compounds of formula (Ic) and (Ic'). The present invention also relates to a compound of formula (Id), a material as defined herein, a method for converting light and methods for producing one or more compound(s) of formula (I) as defined herein. Finally, the present invention relates to the use of one or more compound(s) of formula (I) as defined herein or of a material or mixture as defined herein as a light converter.

## Description

The present invention primarily relates to a compound of formula (I) as defined herein. The present invention further relates to a mixture comprising or consisting of two or more compounds of formula (I) as defined herein, wherein the mixture comprises compounds of formula (la) and (la') or compounds of formula (lb) and (lb') or compounds of formula (Ic) and (Ic'). The present invention also relates to a compound of formula (Id), a material as defined herein, a method for converting light and methods for producing one or more compound(s) of formula (I) as defined herein. Finally, the present invention relates to the use of one or more compound(s) of formula (I) as defined herein or of a material or mixture as defined herein as a light converter.

Further aspects of the present invention will arise from the description below, in particular from the examples, as well as from the attached patent claims.

EP 0077496 B1 describes the use of fluorescent dyes to convert light of 470-600 nm into photosynthetically active light. The chemical structures of the dyes disclosed therein are different from the structures of the compounds of formula (I) of the present invention.

Tetraphenoxy-substituted perylene tetracarboxylic diimide dyes (PhO4PDIs) are disclosed in EP 0227980 B1 by BASF. In example 2 of said patent, for instance, the synthesis of Lumogen^{®} F Red 300 is described:

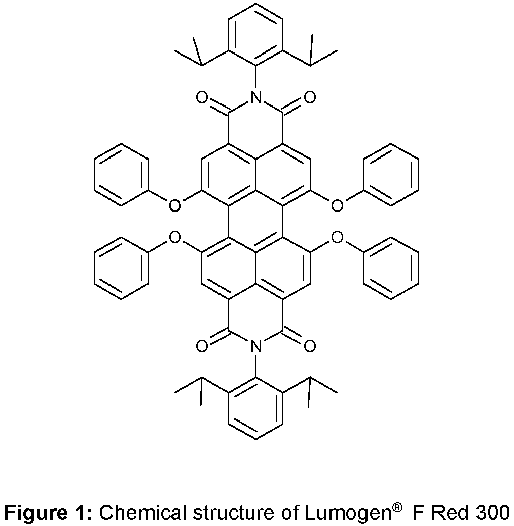

The use of PhO4PDIs in horticulture and improved plant growth and crop yield optimization is described in R. Reisfeld et al., Solar Energy Materials 1990, 21, 17-23.

Tetraphenoxy-substituted perylene tetracarboxylic bisbenzimidazoles (PhO4PBIs) are used in EP 02824138 B1 to extend the spectral regions of the light conversion further into the deep red and near infrared regions.

In EP 3665172 A1 and EP 3924430 A1, the spectral gap between PhO4PDI and PhO4PBI is addressed and diphenoxy-substituted perylene tetracarboxylic bisbenzimidazoles (PhO2PBIs) and their use in horticulture to control photoperiodism of plant growth is described. In EP 3924430 A1, the need for specifically adapted luminescent materials is emphasised. The approach described in EP 3665172 A1, which are the materials used in EP 3924430 A1, has clear limitations. Apart from the limited accessible spectral range and limited tunability of the optical properties, the materials are rather difficult to synthesise and purify for solubility reasons. In the synthetic procedure, five isomers are obtained, which makes quality control difficult.

US 9204598 B2 discloses a wavelength-conversion material and US 8304645 B2 discloses fluorescent dyes for a luminescent solar collector. Compared to the standard light emitter Lumogen^{®} F Red 300 (cf. Fig. 1 above), the PhO4PBIs as described in said patents absorb light which is 60 nm red shifted and emit light with a maximum of around 666 nm. As the emission of the perylenes is ca. 100-200 nm broad and extends towards the red light, i.e. to longer wavelengths, from the maximum, a considerable part of the emitted light does not match with the photosynthetic active region of plants and is thus not usable in the fields of, for example, horticulture, improved plant growth, and crop yield optimization.

EP 3402845 B1 describes the synthesis of a 2,2'-biphenol substituted perylene diimide, which can be used as a colour converter in displays and lighting units according to EP 3571197 B1. Both the absorption and emission are blue shifted by circa 30 nm compared to PhO4PDI. Würthner et al., Angew. Chem. Int. Ed. 2005, 44, 250-253 describe perylene diimide-based fluorophores, wherein the phenoxy groups are connected by an ethylene-dioxy bridge. The blue shift introduced is circa 20 nm.

There is an ongoing need for the development of fluorophores with optimised optical properties, especially of fluorophores whose optical properties can be tailored and fine-tuned to a range of specific applications and that emit with high fluorescence quantum yields.

Therefore, it was an object of the present invention to provide new fluorophores with improved optical properties. Further objects underlying the present invention follow from the description below and the present patent claims.

According to a first aspect of the present invention, the stated object is achieved by a compound of formula (I), 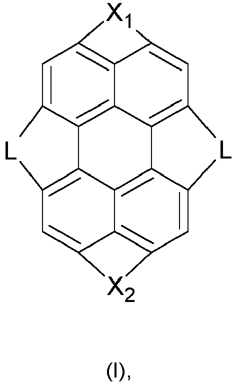 wherein
- X₁ and X₂ are independently selected from the group consisting of 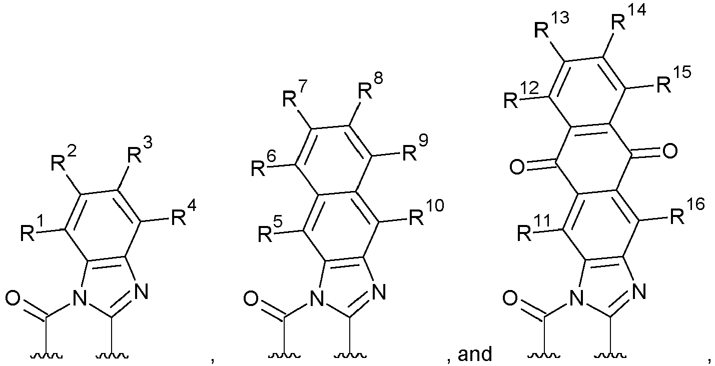 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues, and 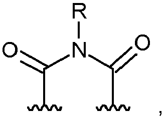 wherein R independently is selected from the group consisting of hydrogen, linear, cyclic, or branched alkyl with 1 to 24 carbon atoms, aryl, substituted aryl, heteroaryl, and substituted heteroaryl, preferably wherein R independently is selected from the group consisting of 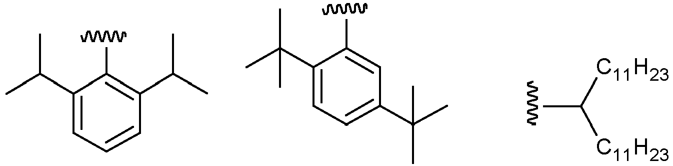 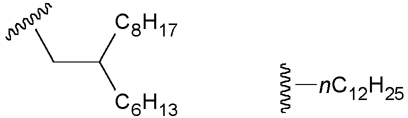 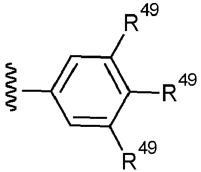 with R⁴⁹ = linear, cyclic or branched C12 alkyl or C12 alkoxy, and
- L is selected from the group consisting of
   (a) 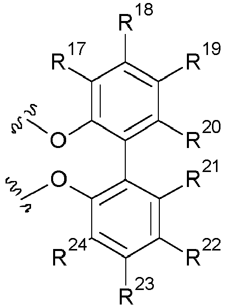 wherein R¹⁷ to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
      or wherein R¹⁷ to R¹⁹ and R²² to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues, and R²⁰ and R²¹ are connected with one another by one or more bridging atoms,
   (b) 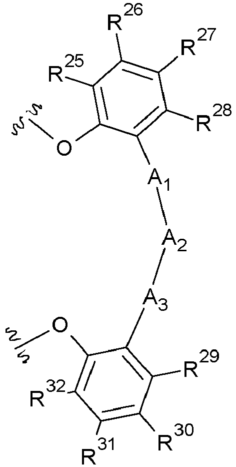 wherein R²⁵ to R³² are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
      and one, two or three of A₁ to A₃ are present, wherein A₁ to A₃, if present, are independently selected from the group consisting of carbon, carbonyl, nitrogen, oxygen, sulfur, sulfoxide, and sulfone, wherein when any of A₁ to A₃ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, and/or wherein when A₁ and A₂ are present and A₃ is not present, A₁ and A₂ can optionally be carbon atoms that are part of a five or six membered (carbon) ring system optionally comprising one or two oxygen atoms in said ring system, and/or wherein when A₁ to A₃ are present, A₁ to A₃ can optionally be carbon atoms that are part of a five or six membered (carbon) ring system,
   (c) 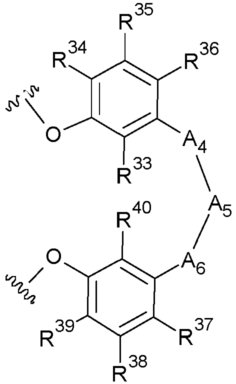 wherein R³³ to R⁴⁰ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues, preferably wherein R³³ and R⁴⁰ are hydrogen residues,
      and one, two or three of A₄ to A₆ are present, wherein A₄ to A₆, if present, are independently selected from the group consisting of carbon, carbonyl, nitrogen, oxygen, sulfur, sulfoxide, and sulfone, wherein when any of A₄ to A₆ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, and
   (d) 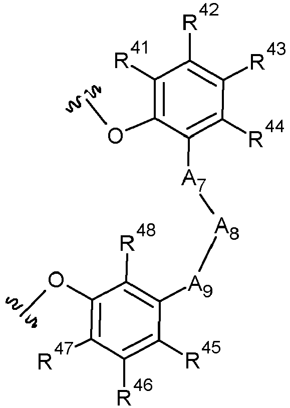 wherein R⁴¹ to R⁴⁸ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues, preferably wherein R⁴¹, R⁴², R⁴⁴, R⁴⁵, R⁴⁷ and R⁴⁸ are hydrogen residues and R⁴³ and R⁴⁶ are independently selected from the group consisting of hydrogen, n-dodecyl, tert-butyl, and tert-octyl,
and one, two or three of A₇ to A₉ are present, wherein A₇ to A₉, if present, are independently selected from the group consisting of carbon, carbonyl, nitrogen, oxygen, sulfur, sulfoxide, and sulfone, wherein when any of A₇ to A₉ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, wherein when both of X₁ and X₂ are a not 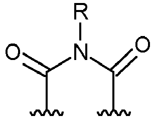 residue as defined, then L is

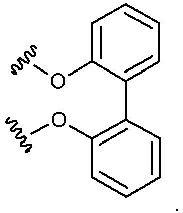

In the context of the studies underlying the present invention, it was surprisingly found that the absorption and emission properties of the compounds of formula (I) according to the present invention, as well as their solubility, can be very effectively fine-tuned with the aid of the specific substituents and bridges inside the L residues as defined herein. This effect can be exploited to tailor the optical properties by conformational confinement at an hitherto unknown precision and subtlety and optimises the materials for a range of applications (cf. below for further details). Overall, the specific absorption of the compounds of formula (I) according to the present invention can be tuned in the range of from 500 to 700 nm and they emit with high fluorescence quantum yields at a maximum wavelength in the range of from 550 to 750 nm.

The compounds of formula (I) according to the present invention work well as fluorescent converters and can be used, for instance, to increase the amount of photosynthetically active light supplied to plants in horticulture and agriculture (cf. below for further details). Further advantageous applications of the compounds of formula (I) according to the present invention will be outlined below.

According to one preferred embodiment, all of R¹ to R⁴ represent hydrogen residues. According to another preferred embodiment, all of R⁵ to R¹⁰ represent hydrogen residues. According to another preferred embodiment, all of R¹¹ to R¹⁶ represent hydrogen residues. Preferably, all of R¹ to R¹⁶ represent hydrogen residues.

According to another preferred embodiment, R¹ and R⁴ are hydrogen residues and R² and R³ are independently selected from the group consisting of linear or branched C1-C18-alkyl, C3-C8-cycloalkyl, C3-C8-cycloalkyl substituted by 1, 2 or 3 C1-C18-alkyl residues, C6-C10-aryl, and C6-C10-aryl substituted by 1, 2 or 3 C1-C12-alkyl residues, and linear, branched or cyclic C1-C18 alkoxy residues.

According to another preferred embodiment, R⁵ and R¹⁰ are hydrogen residues and R⁶ to R⁹ are independently selected from the group consisting of linear or branched C1-C18-alkyl, C3-C8-cycloalkyl, C3-C8-cycloalkyl substituted by 1, 2 or 3 C1-C18-alkyl residues, C6-C10-aryl, and C6-C10-aryl substituted by 1, 2 or 3 C1-C12-alkyl residues, and linear, branched or cyclic C1-C18 alkoxy residues.

According to another preferred embodiment, R¹¹ and R¹⁶ are hydrogen residues and R¹² to R¹⁵ are independently selected from the group consisting of linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues.

According to another preferred embodiment, one, two, three, four or more of R¹ to R¹⁶ (or of R¹ to R⁴ or of R⁵ to R¹⁰ or of R¹¹ to R¹⁶) independently are selected from the group consisting of linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues, while the remaining ones of R¹ to R¹⁶ (or of R¹ to R⁴ or of R⁵ to R¹⁰ or of R¹¹ to R¹⁶) represent hydrogen.

R¹⁹ and R²² preferably are independently selected from the group consisting of aryl, substituted aryl, linear alkyl (preferably with 1 to 24 carbon atoms), and branched alkyl residues (preferably with 1 to 24 carbon atoms), most preferably are independently selected from the group consisting of *tert*-butyl, *n*-dodecyl, *tert*-octyl (1,1,3,3-tetramethylbutyl), and phenyl residues.

R²⁷ and R³⁰ preferably are independently selected from the group consisting of hydrogen, *n*-dodecyl, *tert*-butyl, and *tert*-octyl.

R³⁶ and R³⁷ preferably are independently selected from the group consisting of hydrogen, *n*-dodecyl, *tert*-butyl, and *tert*-octyl.

Advantageously, the preferred R residues as defined herein improve the solubility of the compounds of formula (I) according to the invention, reduce aggregation and improve the compatibility of the compounds of formula (I) according to the invention with polymer matrices.

Preferably, in a compound of formula (I) according to the present invention, X₁ is selected from the group consisting of 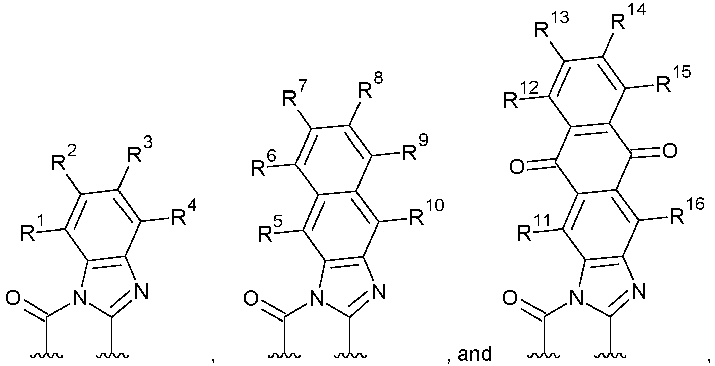 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues, and X₂ is the same as X₁ or is 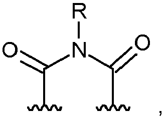 wherein R independently is selected from the group consisting of hydrogen, linear, cyclic, or branched alkyl with 1 to 24 carbon atoms, aryl, substituted aryl, heteroaryl, and substituted heteroaryl, preferably wherein R independently is selected from the group consisting of 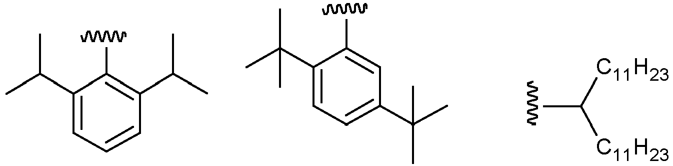 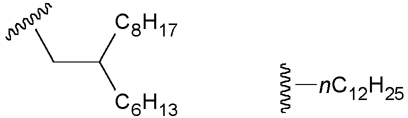 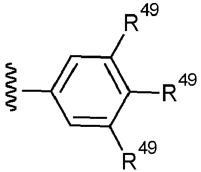 with R⁴⁹ = linear, cyclic or branched C12 alkyl or C12 alkoxy

According to a particularly preferred embodiment of the compound of formula (I), both X₁ and X₂ are selected from the group consisting of 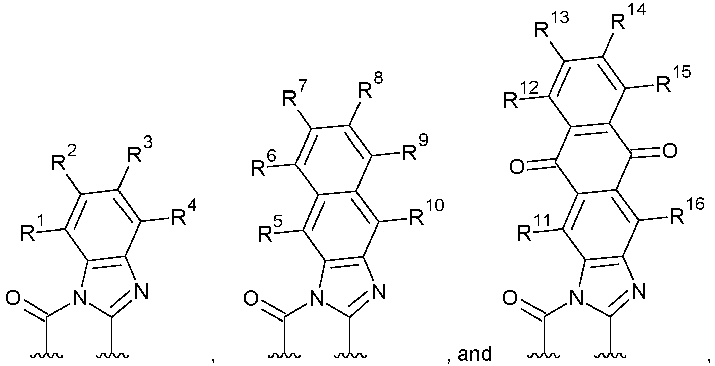 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues.

Advantageously, the optical properties of the compounds of formula (I) according to the present invention, especially of this embodiment, are able to specifically emit light that interacts with the photosynthetic systems of plants. Plants need light energy for their growth and development. Important physiological processes such as, for instance, photosynthesis are based on the interaction between plants and light. Photosynthesis means the conversion of light energy into chemical energy. Plants use different kinds of photoreceptors to sense, evaluate and respond to light quality, quantity and direction. The photoreceptors are characterised by the wavelength of light that they perceive. For photosynthesis, plants mainly use light in the wavelength range from about 400 to 700 nm, which is called the photosynthetically active radiation (PAR), especially the blue (300 to less than 500 nm) and red (570 to less than 680 nm) wavelength range. Blue light is essential for photosynthesis and stomatal movement, and thus biomass production. Red light is essential for photosynthesis and thus also for biomass production. PAR is perceived mainly by chlorophylls a and b and carotenoids.

A growing world population makes it increasingly necessary to produce more food and, in addition, to cultivate crops even in climatically unfavourable regions. In addition, many consumers want to buy fruit, vegetables, and flowers out of season. Thus, commercial plant cultivation in artificial cultivation systems such as greenhouses, soilless systems, and plant factories plays an important role in meeting these needs. The artificial cultivation systems require artificial light and/or sunlight. Horticulture lighting is often designed to provide mainly or exclusively light that is most effective for photosynthesis. Moreover, it is known that fluorescent polymer films doped with specific perylene dyes can be used to alter the spectral composition of light. Said films can be used to cover plants.

It was found in the studies underlying the present invention that the compounds of formula (I) according to this embodiment of the invention absorb light which is about 30 nm red shifted compared to Lumogen^{®} F Red 300 (cf. Fig. 1 above) and have a maximum of emission at 620-640 nm. This is particularly advantageous as the compounds of formula (I) according to this embodiment emit light in a wavelength that can be absorbed by the phytochrome P660 of plants, because their light emission range covers 660 nm. Most of their emitted light is in the photosynthetically active region of plants (up to 700 nm). The use of materials, such as for instance polymer films, comprising the compounds of formula (I) according to the present invention, especially comprising compounds of formula (I) according to this embodiment, in horticultural or agricultural applications thus increases the rate of photosynthesis and consequently stimulates biomass production.

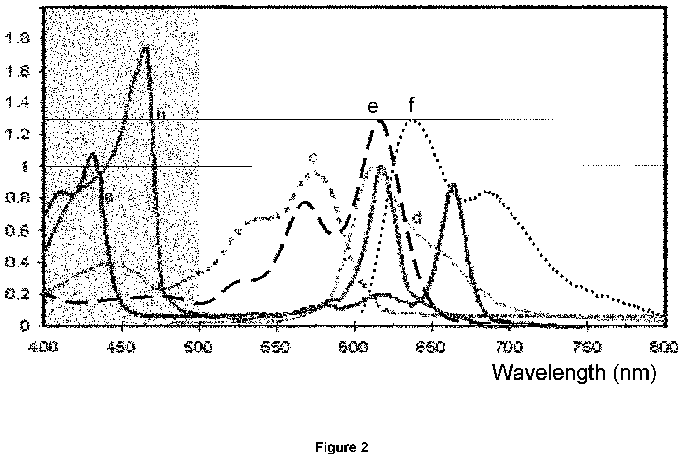

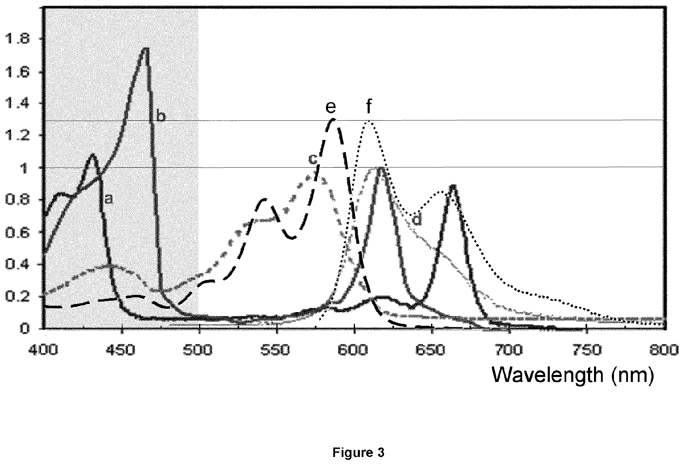

Surprisingly, it was further found that the compounds of formula (I) according to the present invention absorb light less strongly in the region of 400 to 500 nm as compared to the standard Lumogen^{®} F Red 300 (cf. **Fig. 2** and **3** and **Table 2** below). Since the blue light region is essential for photosynthesis, too, this is particularly advantageous.

When L is selected from the group consisting of
(a) 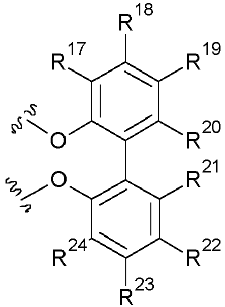 wherein R¹⁷ to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
and when R²⁰ and R²¹ are not connected with one another by one or more bridging atoms,

it was surprisingly found that the absorption and emission of the compounds of formula (I) may be fine-tuned by choosing one or more of R¹⁷ to R²⁴ to be an alkyl group as defined, especially in positions R¹⁷ and R²⁴ or R²⁰ and R²¹ with an opposite effect. This is a special effect of the covalently connected phenoxy groups. According to quantum chemical calculations (e.g. by MOPAC, using the PM7 method), it was found that alkyl substituents in positions R¹⁷ and R²⁴ or in positions R²⁰ and R²¹ influence the bonding situation of the phenoxy groups with the perylene core by sterical repulsion of the respective (e.g. primary or secondary) alkyl groups, which leads to changes in the dihedral angles of both bonds to the phenolic oxygens and hence to a change in the conjugation of both parts (the perylene and the phenoxy groups) of the respective molecule. In the same way, alkyl-substitution of R²⁵ and R³² or R³⁴ and R³⁹ (as defined herein) can be used to modify the absorption and emission wavelength in a subtle way.

Preferably, R¹⁸ and R²³, or more preferably R¹⁹ and R²², are alkyl residues as defined herein, more preferably are branched alkyl residues, most preferably are tert-butyl or *tert-*octyl residues.

Preferably, R²⁶ and R³¹, or more preferably R²⁷ and R³⁰, are alkyl residues as defined herein, more preferably are branched alkyl residues, most preferably are tert-butyl or *tert-*octyl residues.

Preferably, R³⁶ and R³⁷, or more preferably R³⁵ and R³⁸, are alkyl residues as defined herein, more preferably are branched alkyl residues, most preferably are tert-butyl or *tert-*octyl residues.

This advantageously improves the solubility of the compounds of formula (I), improves compatibility with polymeric matrices, and avoids aggregation at higher concentrations.

According to another preferred embodiment of the compound of formula (I) according to the invention, X₁ is selected from the group consisting of 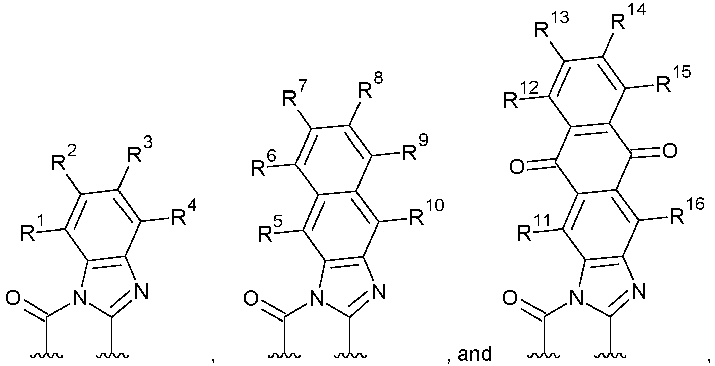 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues, and X₂ is 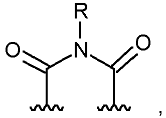 wherein R independently is selected from the group consisting of hydrogen, linear, cyclic, or branched alkyl with 1 to 24 carbon atoms, aryl, substituted aryl, heteroaryl, and substituted heteroaryl, preferably wherein R independently is selected from the group consisting of 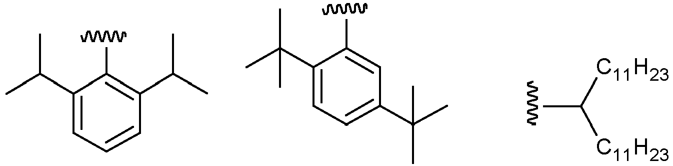 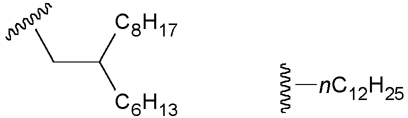 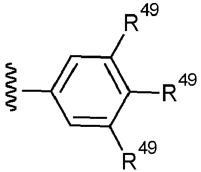 with R⁴⁹ = linear, cyclic or branched C12 alkyl or C12 alkoxy

The compounds of formula (I) of this embodiment typically cover a 30-60 nm shorter wavelength region in absorption and emission compared to the compounds of formula (I) wherein both X₁ and X₂ are selected from the group consisting of 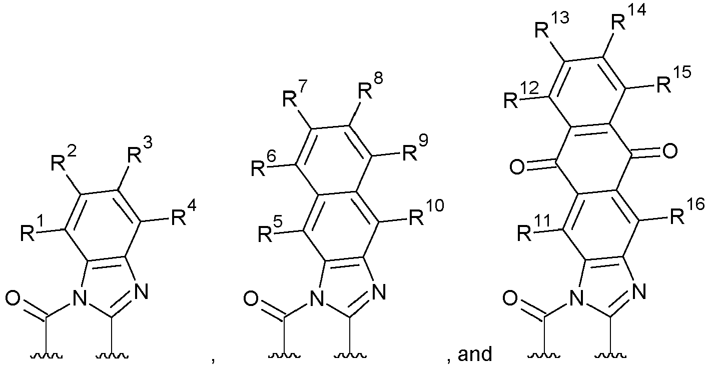 as defined herein.

Hence, particularly interesting applications for the compounds of formula (I) of this embodiment are as light converters for lighting and in signage, e.g. in fluorescent films for road signs, in horticulture and agriculture.

Preferably, R¹⁸ and R²³, or more preferably R¹⁹ and R²², are alkyl residues as defined herein, more preferably are branched alkyl residues, most preferably are tert-butyl or *tert-*octyl residues.

Preferably, R²⁶ and R³¹, or more preferably R²⁷ and R³⁰, are alkyl residues as defined herein, more preferably are branched alkyl residues, most preferably are tert-butyl or *tert-*octyl residues.

Preferably, R³⁶ and R³⁷, or more preferably R³⁵ and R³⁸, are alkyl residues as defined herein, more preferably are branched alkyl residues, most preferably are tert-butyl or *tert-*octyl residues.

This advantageously improves the solubility of the compounds of formula (I), improves compatibility with polymeric matrices, and avoids aggregation at higher concentrations.

Preferably, R¹⁹ and R²² are aryl, preferably alkyl-substituted or unsubstituted phenyl, 1-naphthyl, or 9-anthryl residues. Preferably, R²⁷ and R³⁰ are aryl, preferably alkyl-substituted or unsubstituted phenyl, 1-naphthyl, or 9-anthryl residues. Preferably, R³⁶ and R³⁷ are aryl, preferably alkyl-substituted or unsubstituted phenyl, 1-naphthyl, or 9-anthryl residues. These embodiments are particularly advantageous as they red-shift both the absorption and emission of said compounds of formula (I) by circa 20-50 nm (compared to embodiments wherein R¹⁷ to R²⁴ or R²⁵ to R³² or R³³ to R⁴⁰ or R⁴¹ to R⁴⁸ - whichever is applicable - all are residues independently selected from the group consisting of hydrogen and linear, cyclic, or branched alkyl with 1 to 24 carbon atoms) and thus bring the compounds into the region which is particularly interesting for light conversion in horticultural and agricultural films.

According to another preferred embodiment of the compound of formula (I) according to the present invention, both X₁ and X₂ are 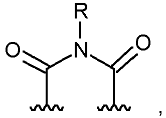 wherein R independently is selected from the group consisting of hydrogen, linear, cyclic, or branched alkyl with 1 to 24 carbon atoms, aryl, substituted aryl, heteroaryl, and substituted heteroaryl, preferably wherein R independently is selected from the group consisting of 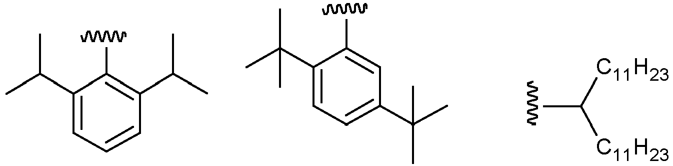 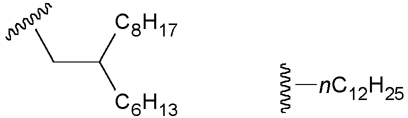 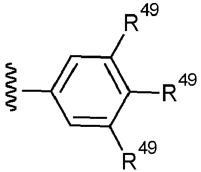 with R⁴⁹ = linear, cyclic or branched C12 alkyl or C12 alkoxy

The compounds of formula (I) of this embodiment typically absorb and emit light at a wavelength which is 50-80 nm shorter compared to the one of the compounds of formula (I) wherein both X₁ and X₂ are selected from the group consisting of 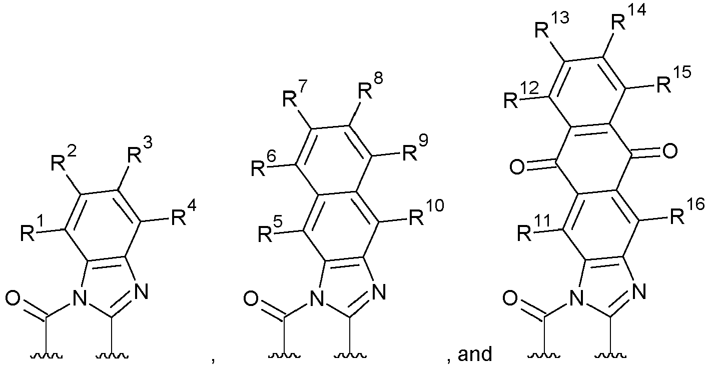 as defined herein.

Hence, particularly interesting applications for the compounds of formula (I) of this embodiment are in road signs, especially in places where specific colour ranges are mandated by state norms. With the compounds of formula (I) of this embodiment such colour points can advantageously be reached by using only fluorescent compound of formula (I) as defined, whereas in the state of the art typically two dyes are necessary to reach the desired colour point (cf. e.g. US 5674622 A).

Within the framework of the present text, both L residues in a compound of formula (I) are the same.

According to another preferred embodiment of the compound of formula (I) according to the present invention, L is not 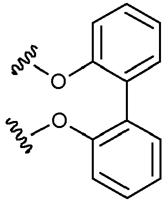 when both of X₁ and X₂ are

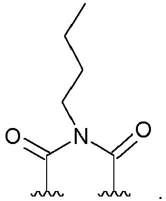

According to another preferred embodiment of the compound of formula (I) according to the present invention, L is not 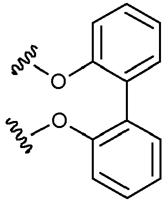 when both of X₁ and X₂ are

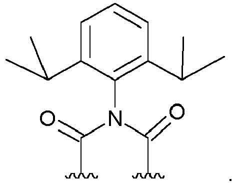

According to another preferred embodiment, X₁ and/or X₂, more preferably X₁ and X₂, are

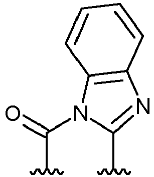

According to another preferred embodiment, X₁ and/or X₂, more preferably X₁ and X₂, are

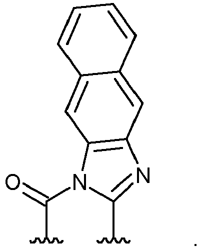

According to another preferred embodiment, X₁ and/or X₂, more preferably X₁ and X₂, are

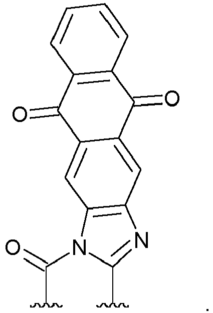

According to another preferred embodiment, X₁ and/or X₂, more preferably X₁ and X₂, are

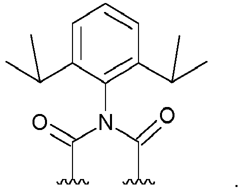

According to another preferred embodiment, X₁ and/or X₂, more preferably X₁ and X₂, are

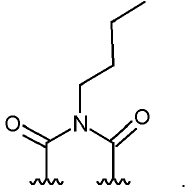

According to another preferred embodiment, X₁ is 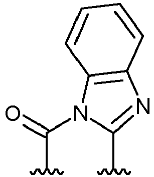 and Xz

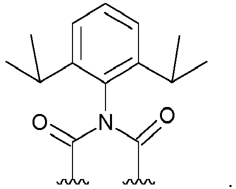

Preferably, L is selected from the group consisting of

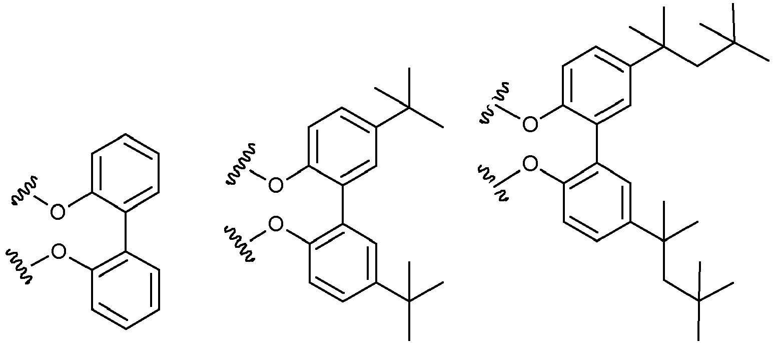

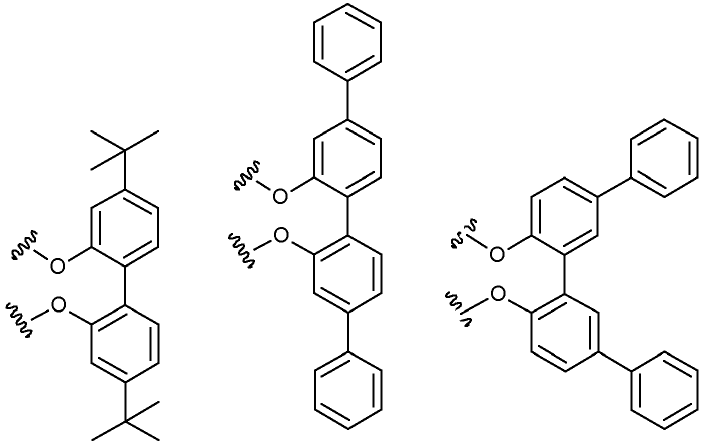

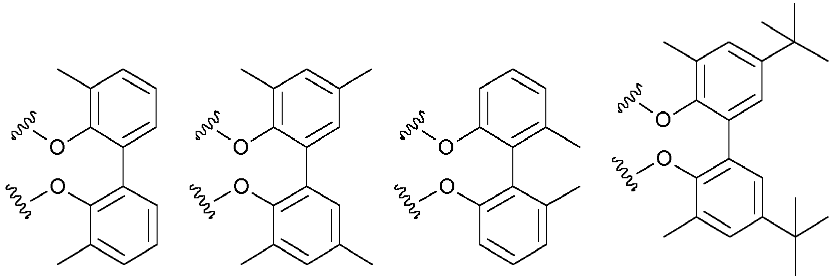

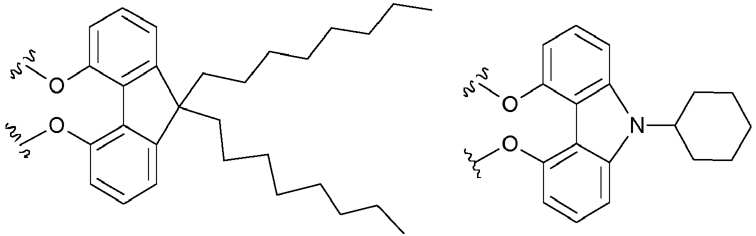

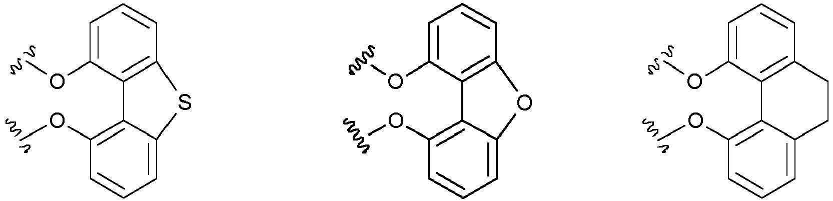

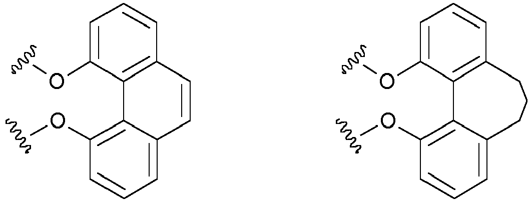

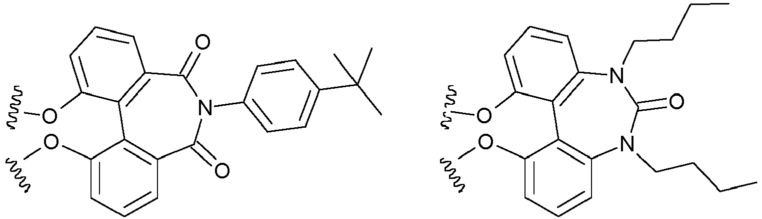

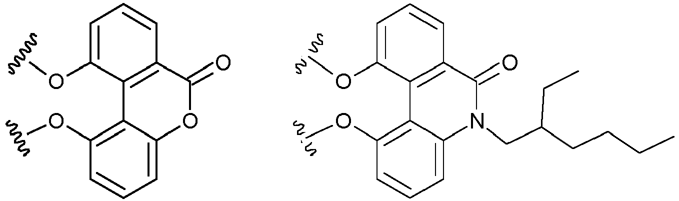

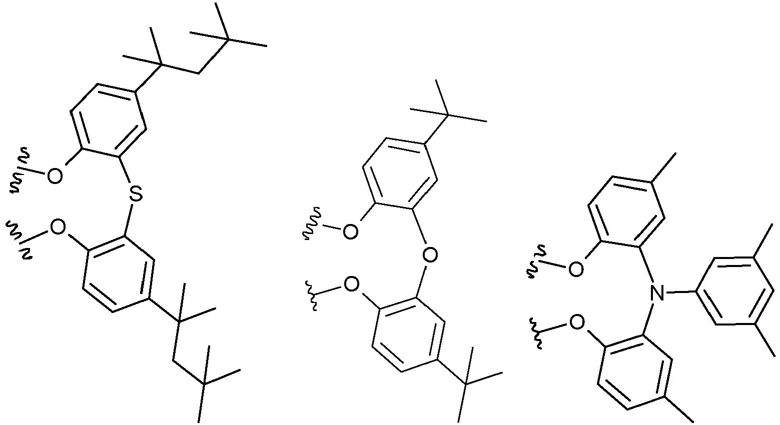

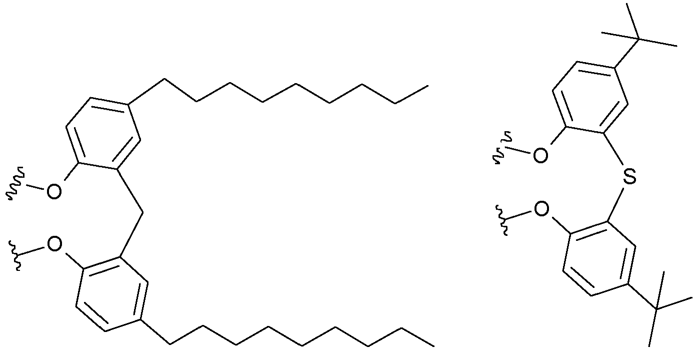

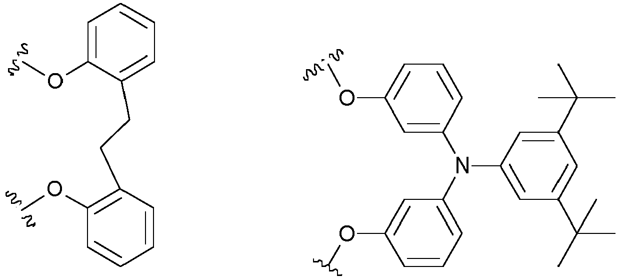

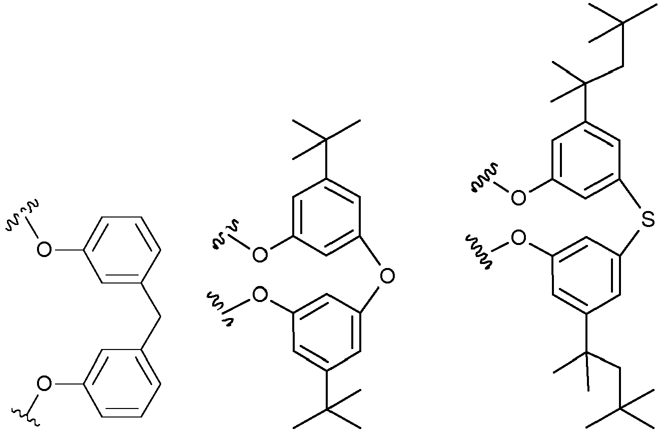

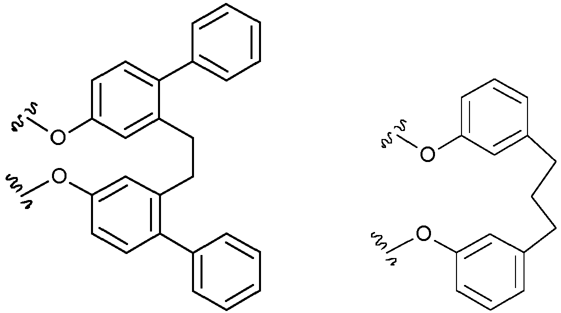

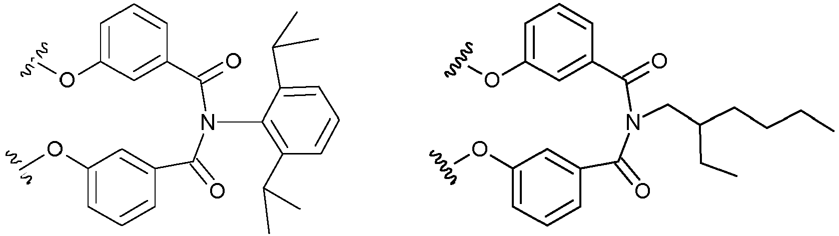

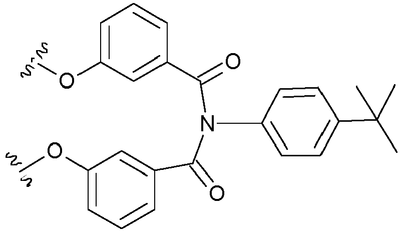

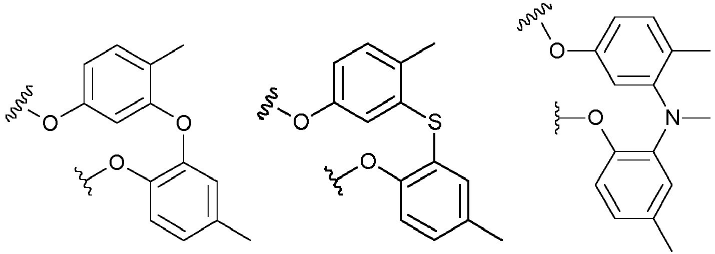

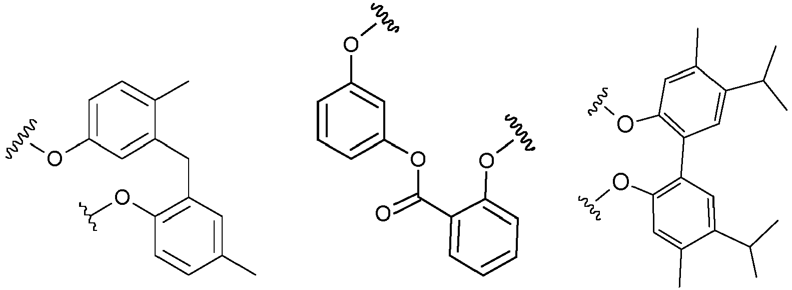

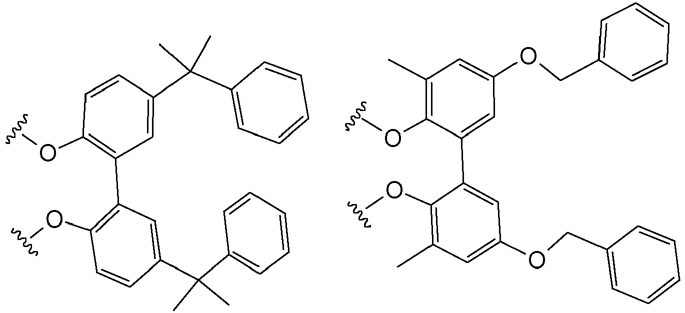

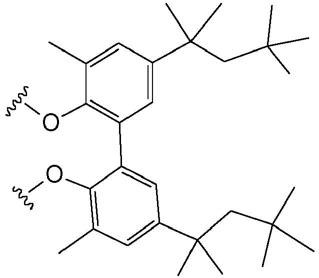

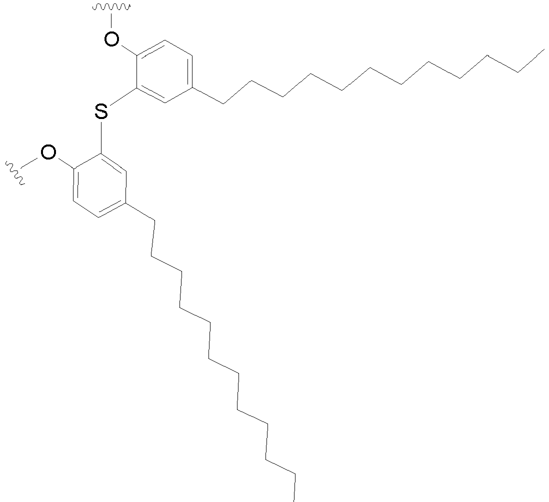

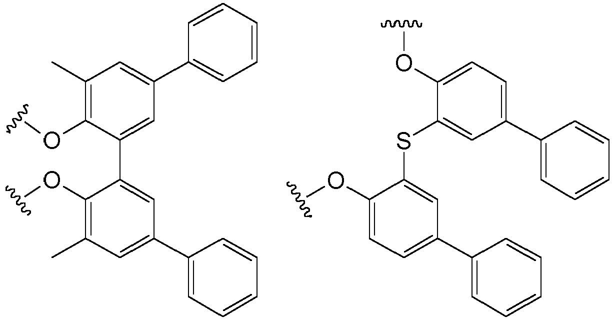

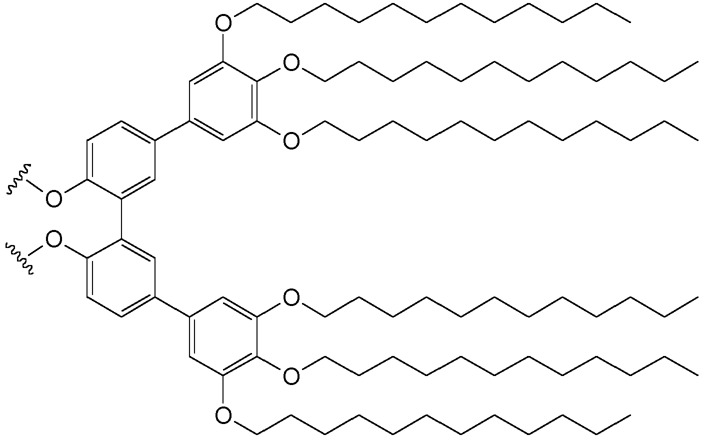

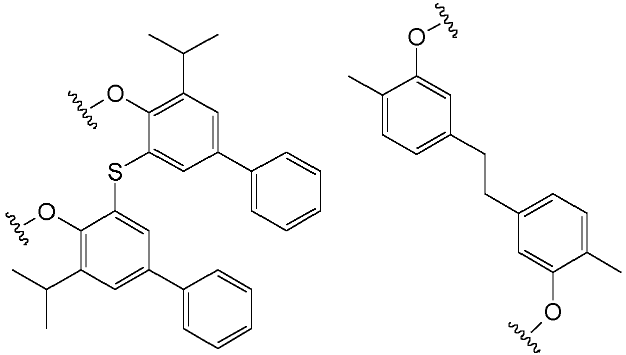

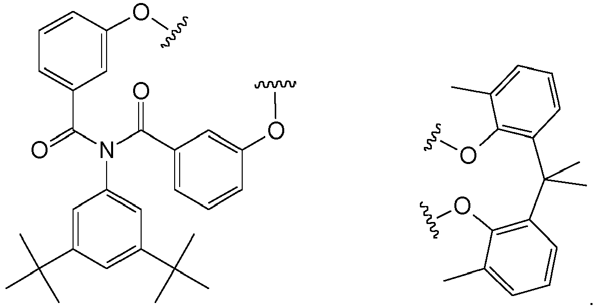

Particularly preferably, L is selected from the group consisting of

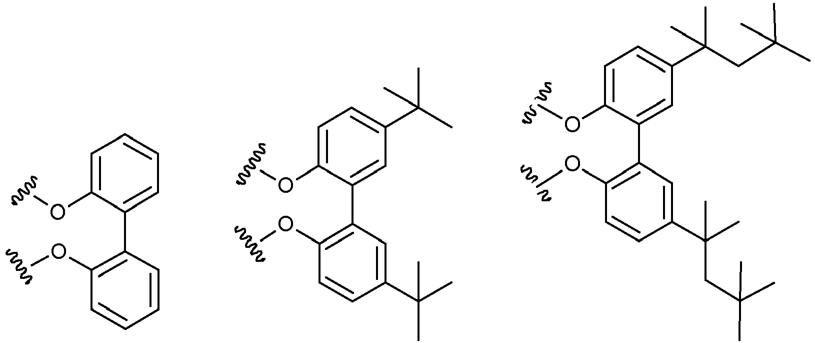

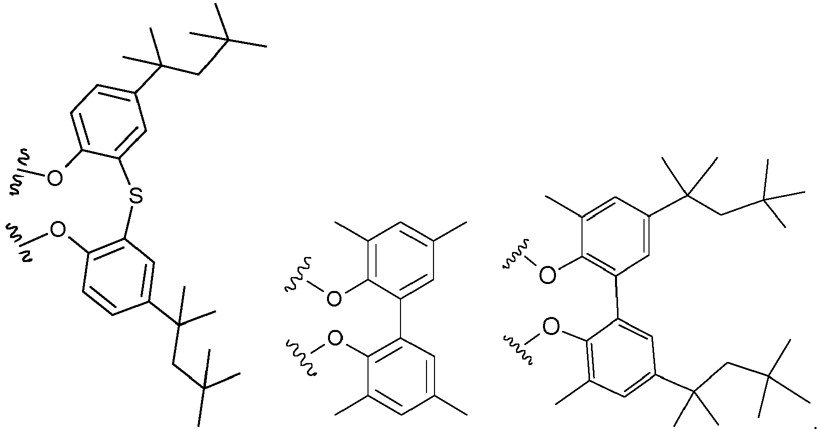

Preferably, a compound of formula (I) is selected from the group consisting of

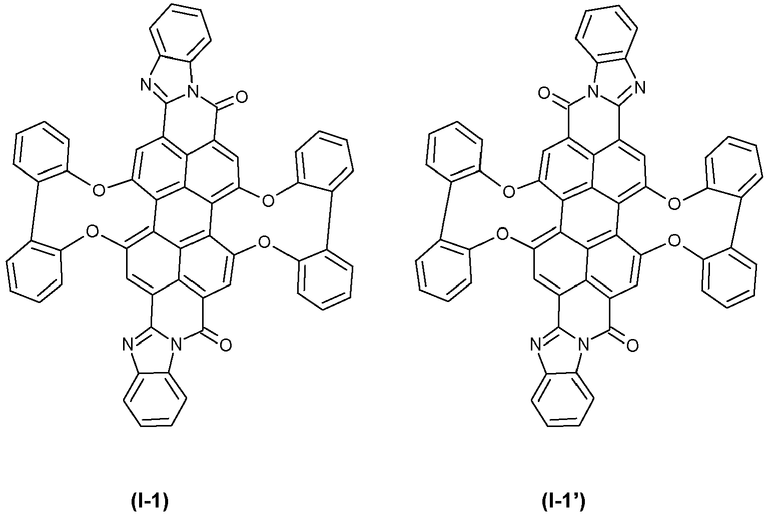

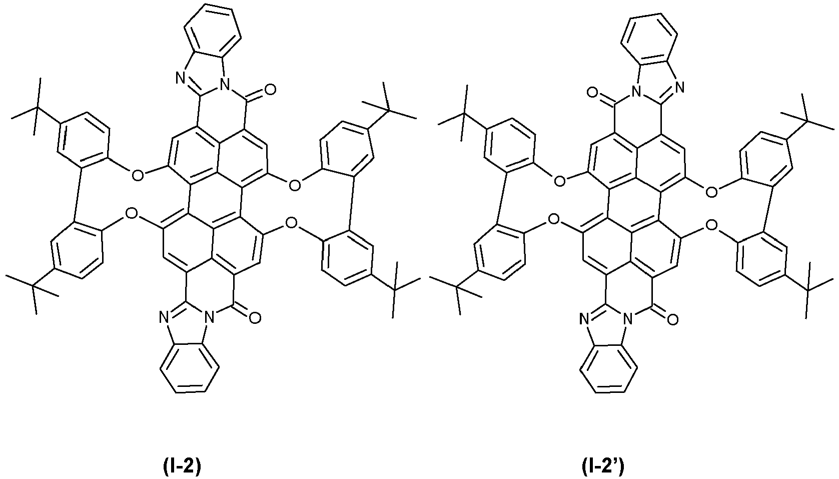

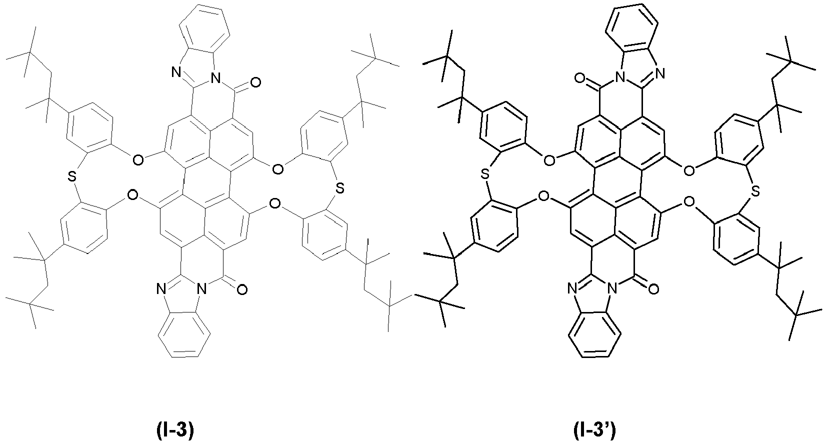

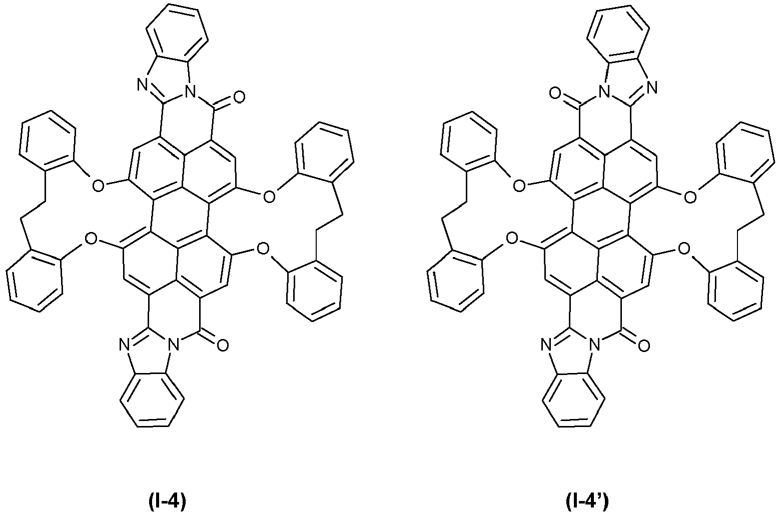

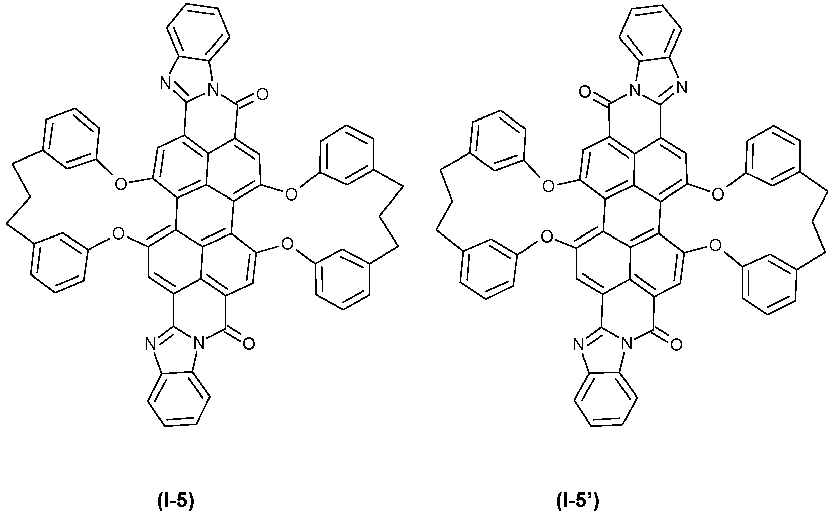

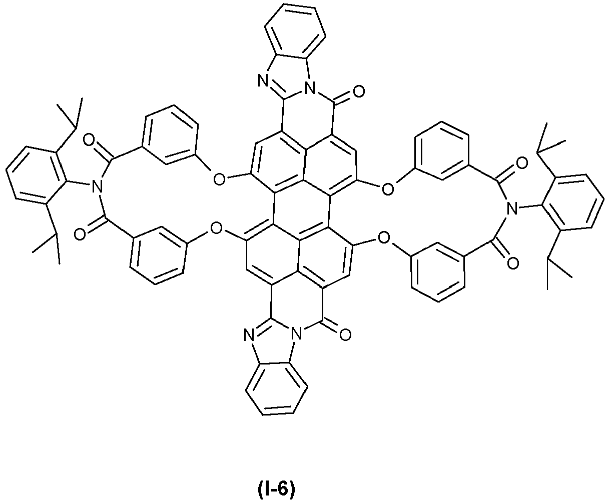

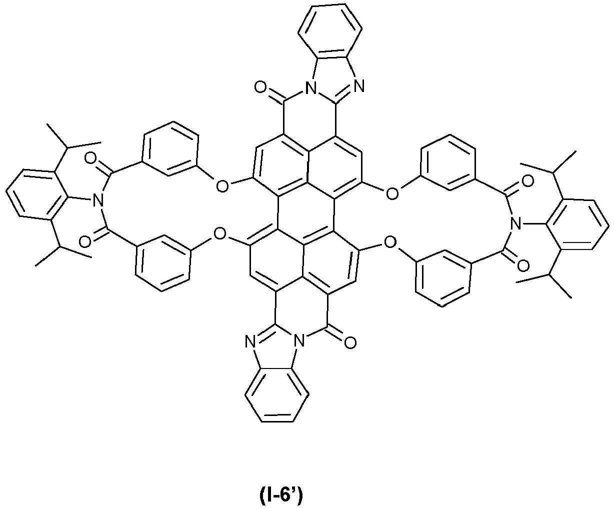

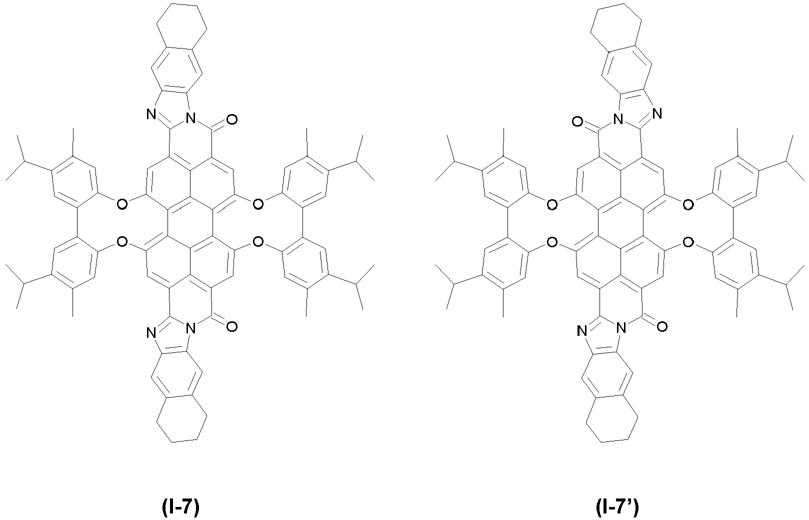

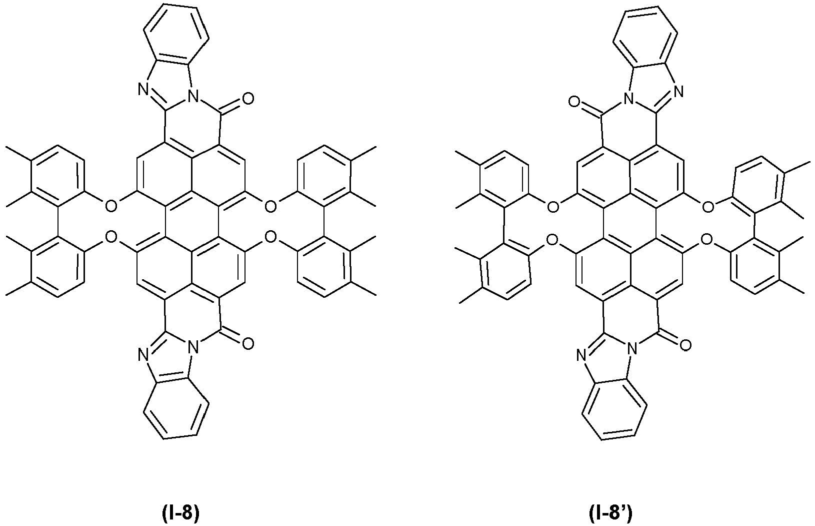

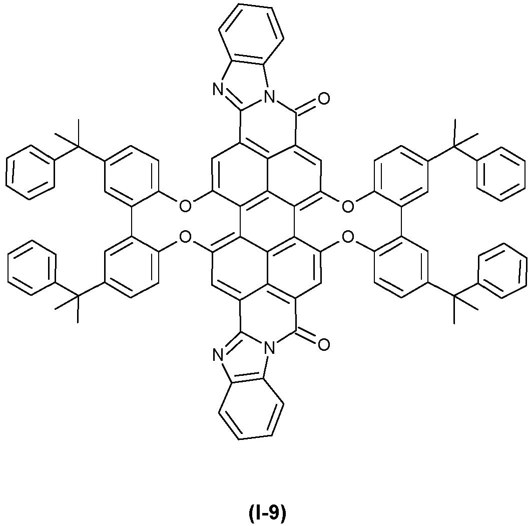

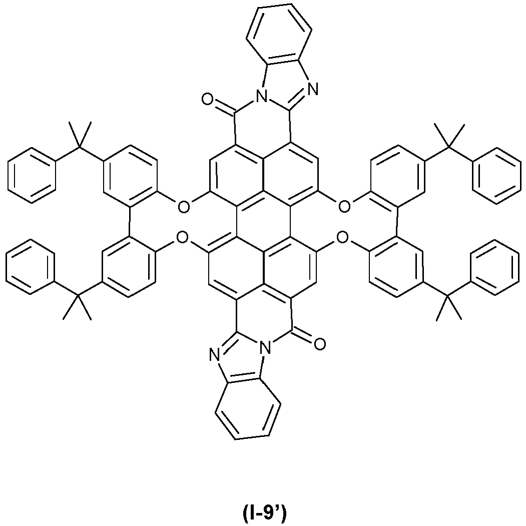

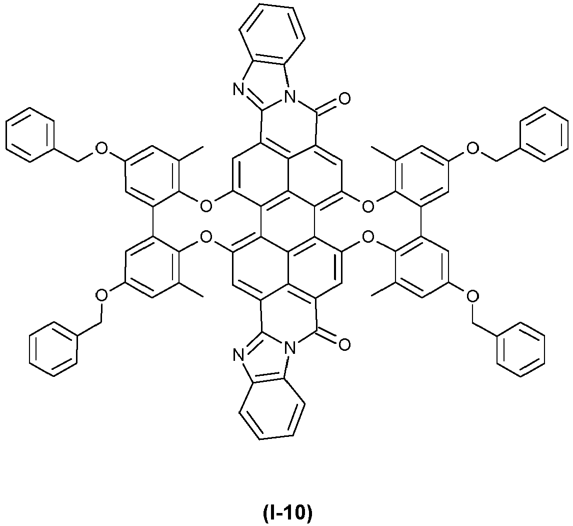

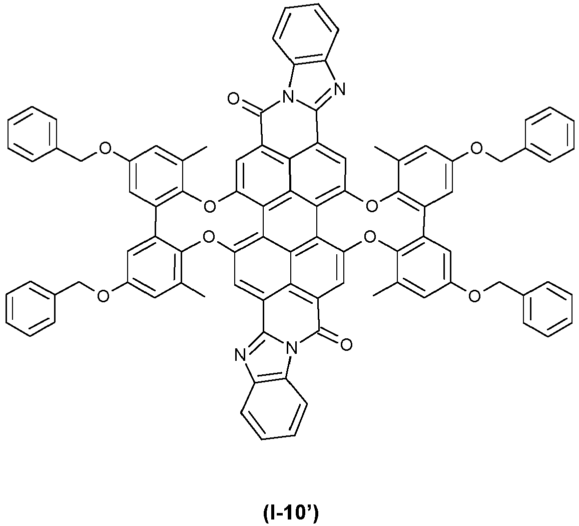

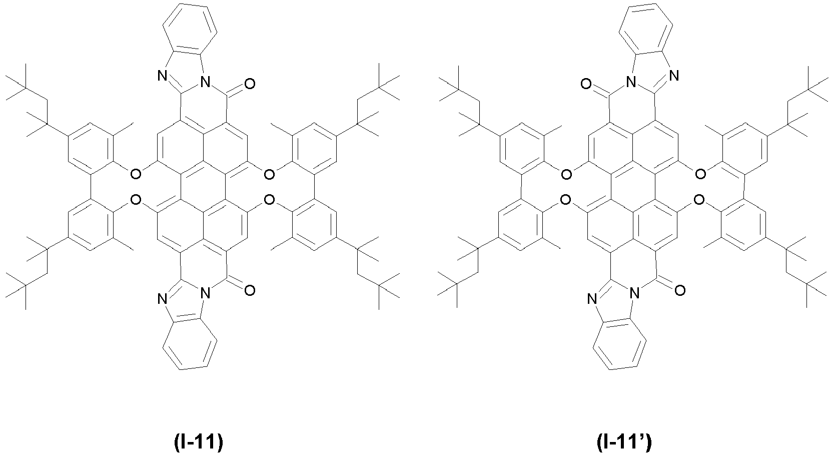

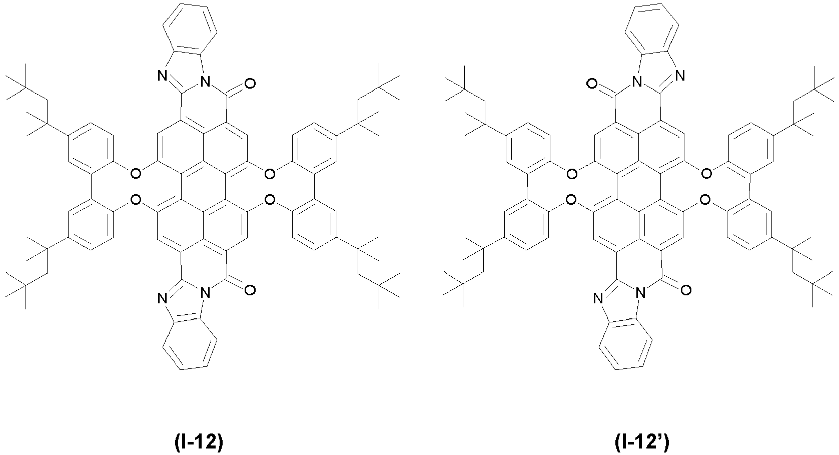

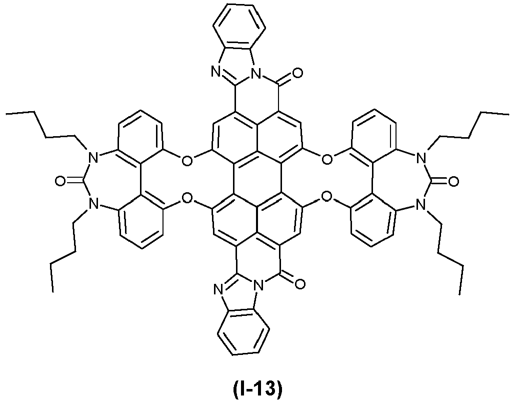

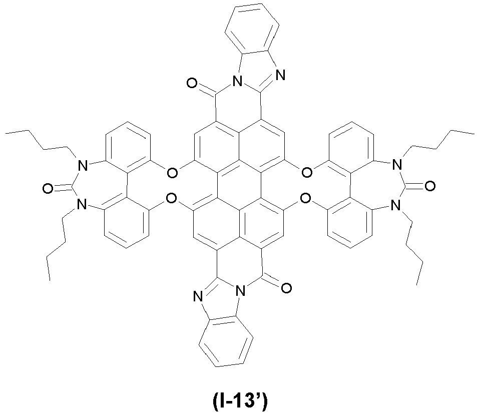

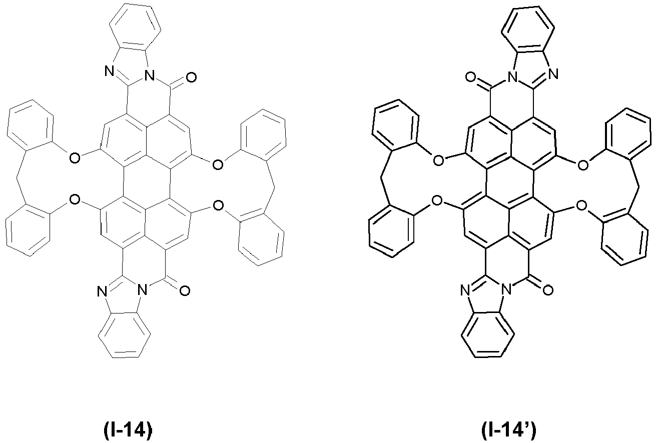

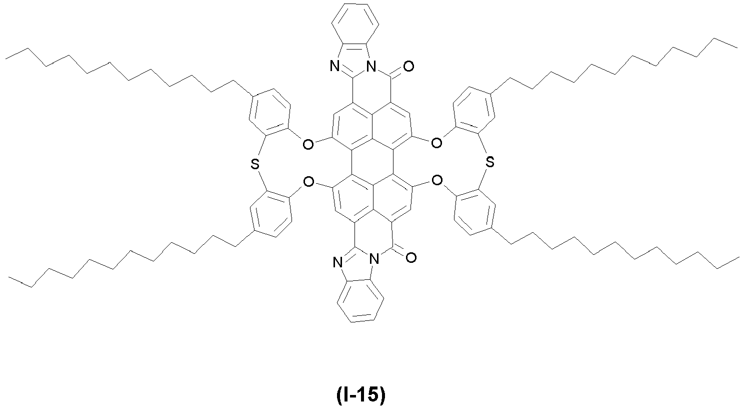

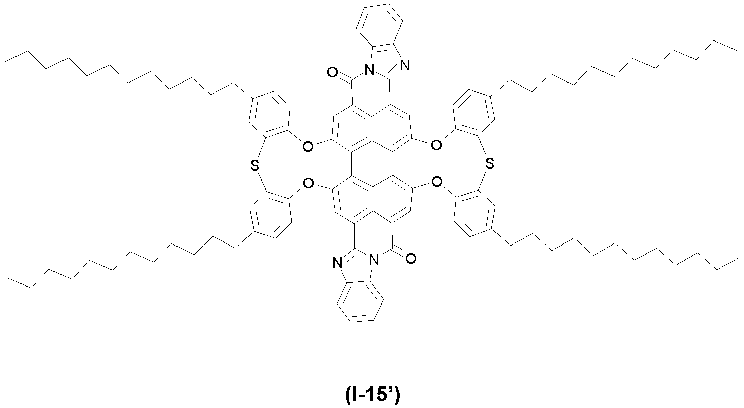

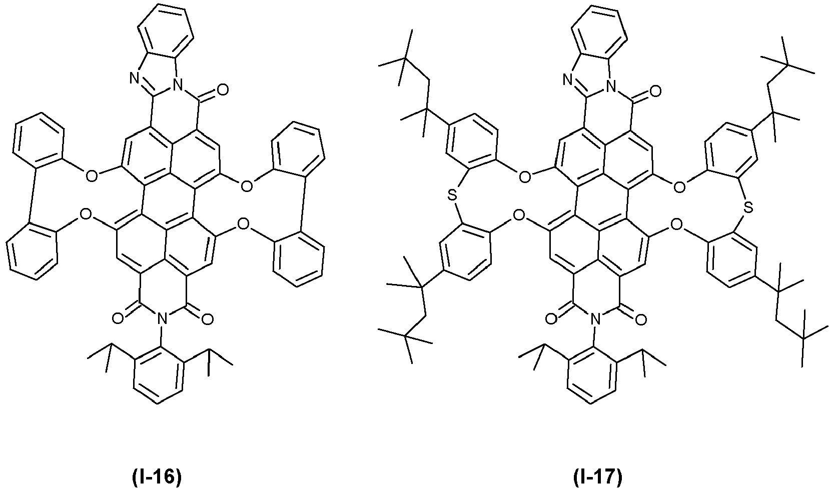

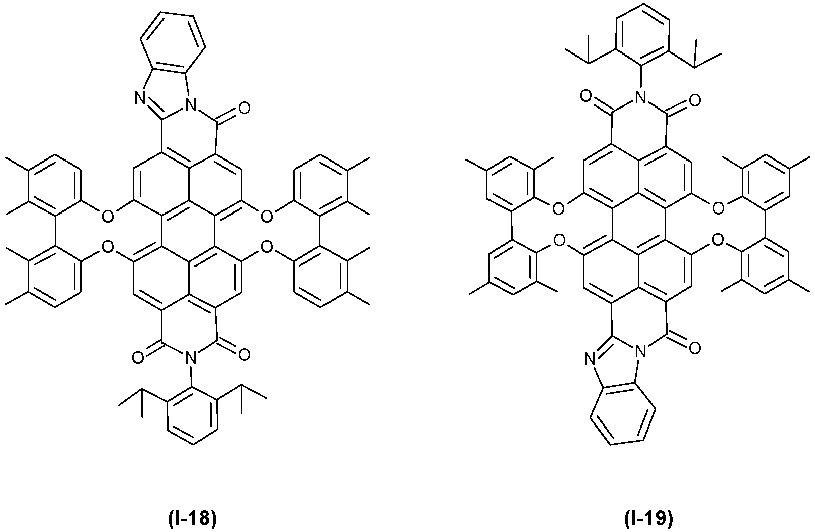

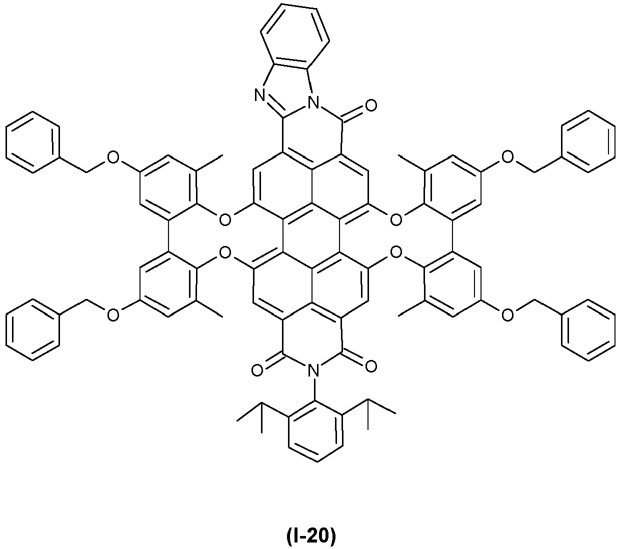

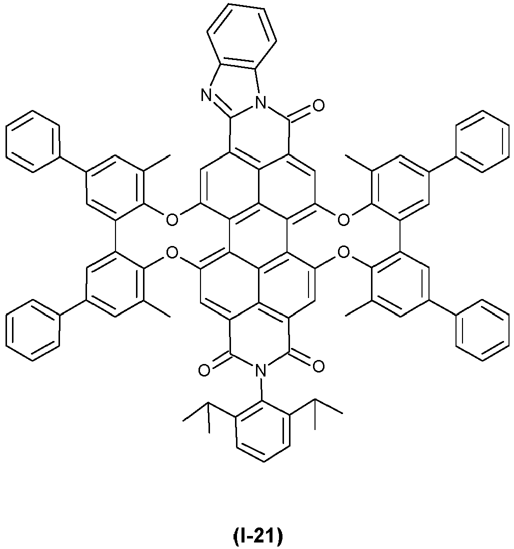

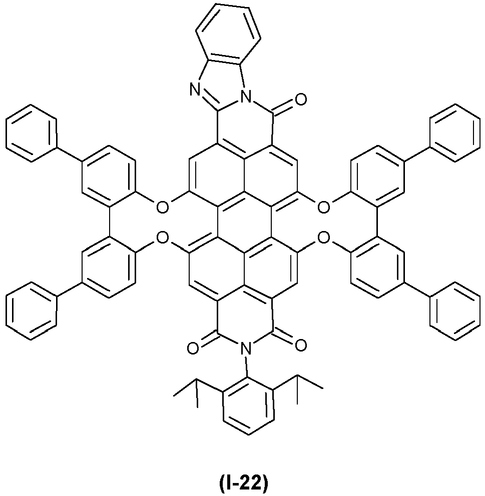

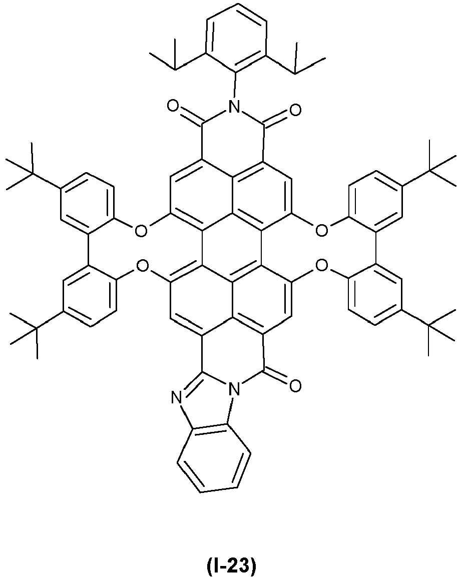

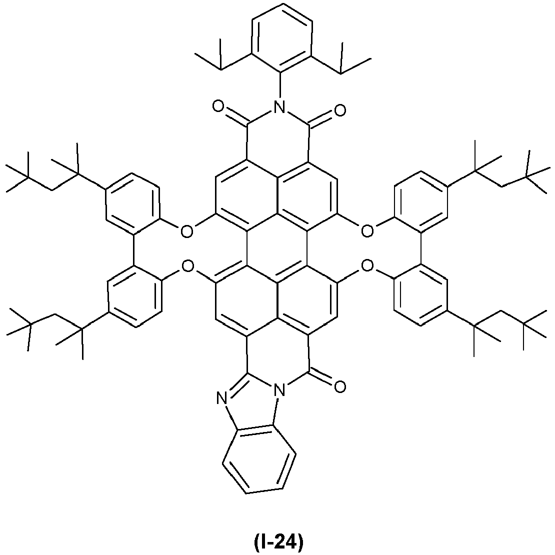

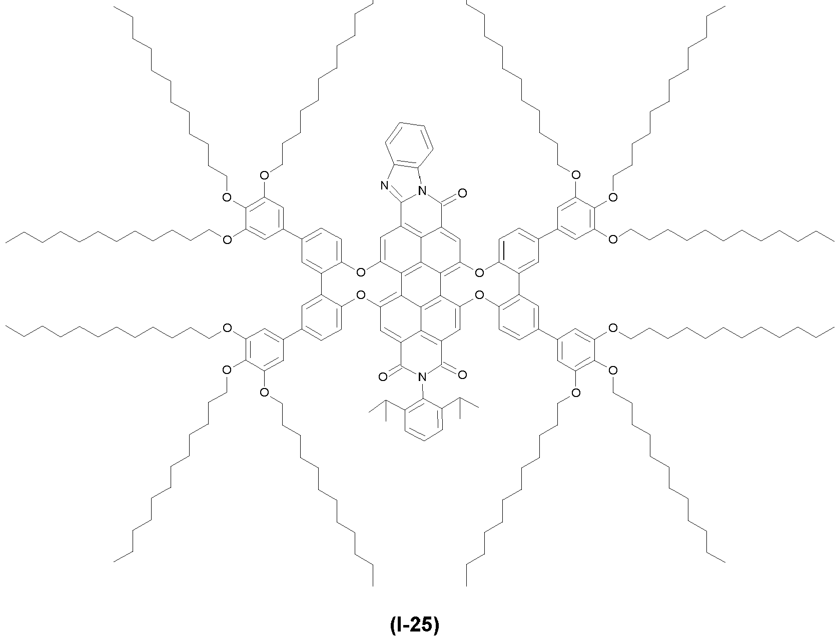

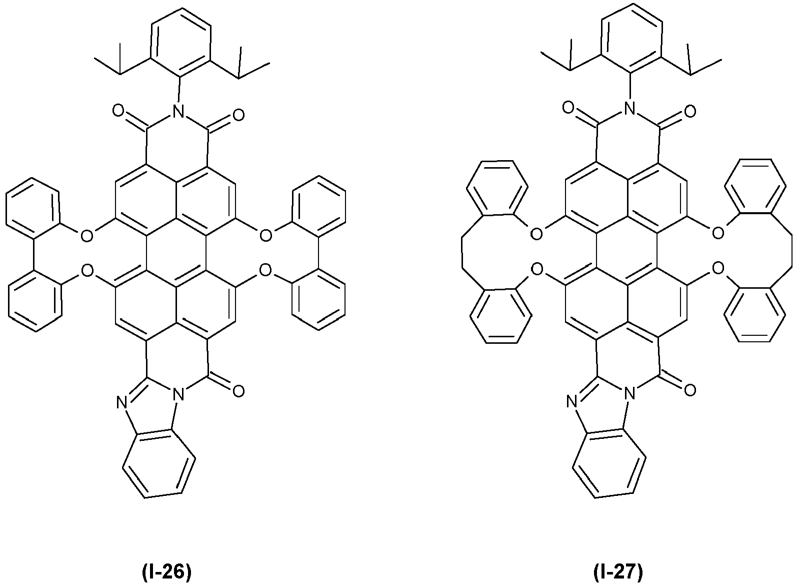

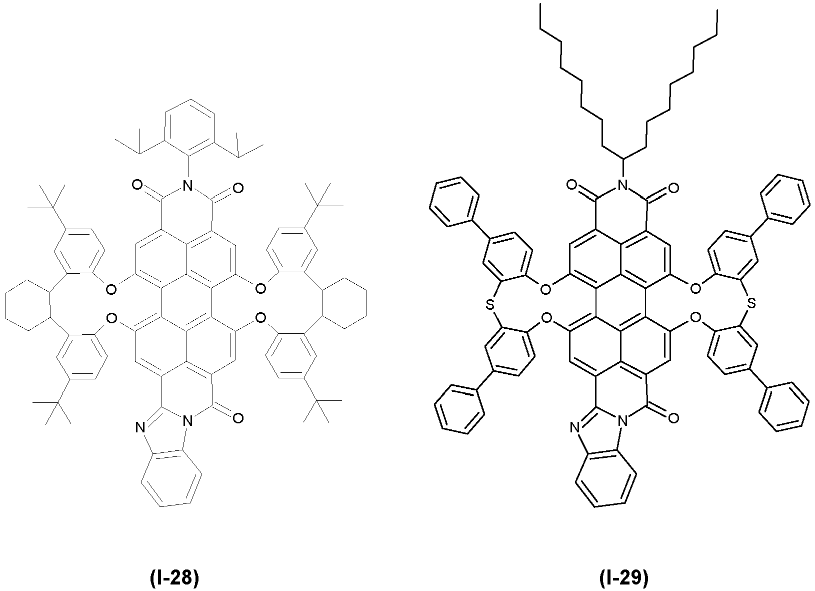

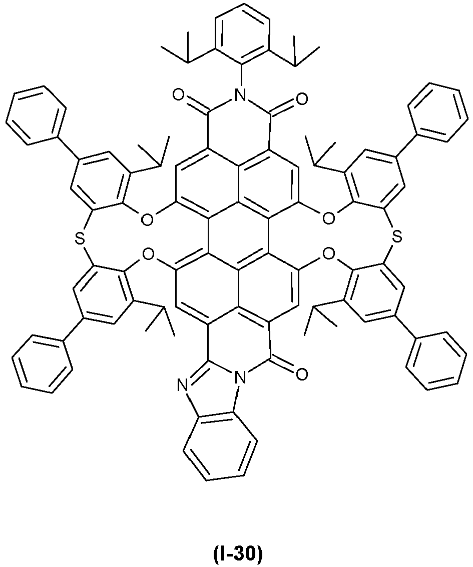

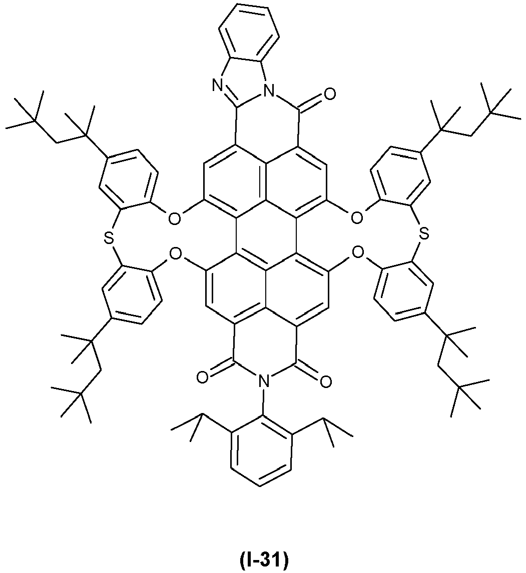

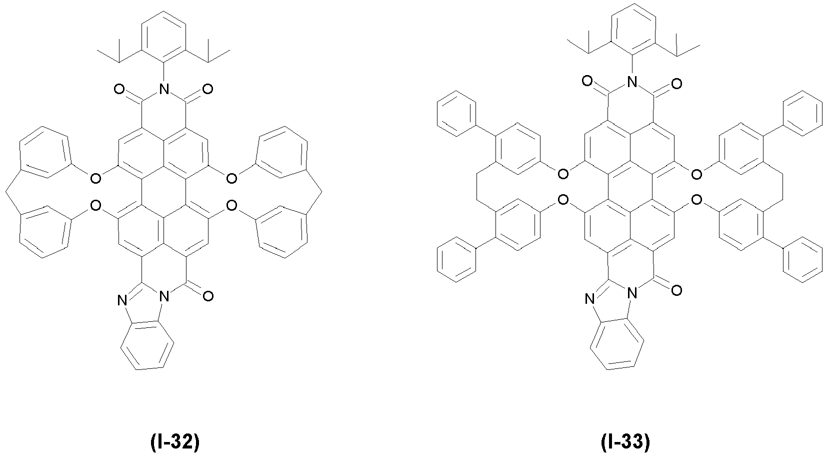

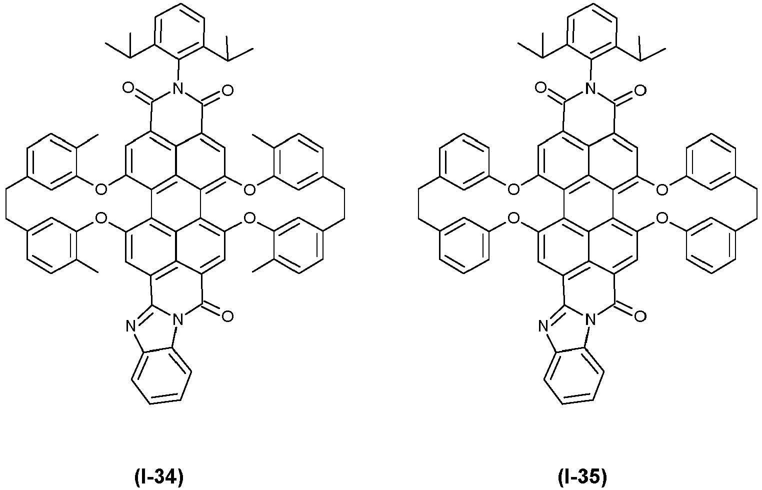

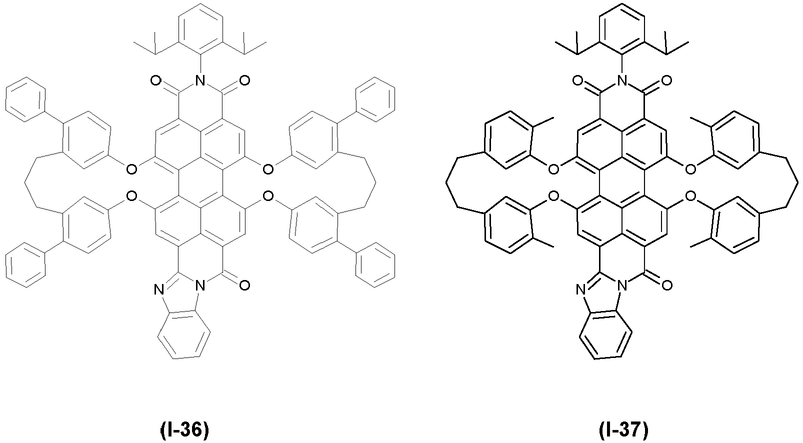

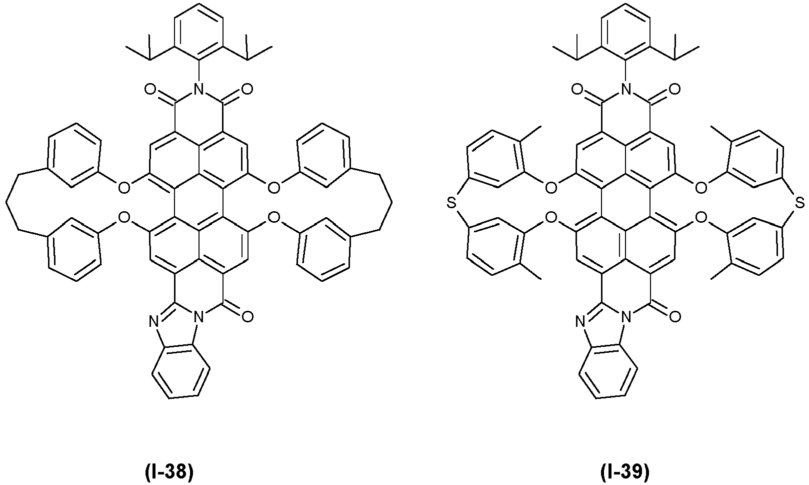

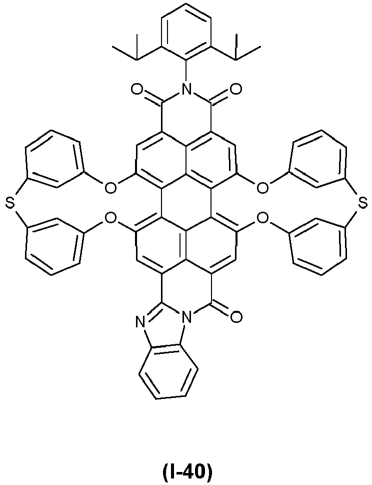

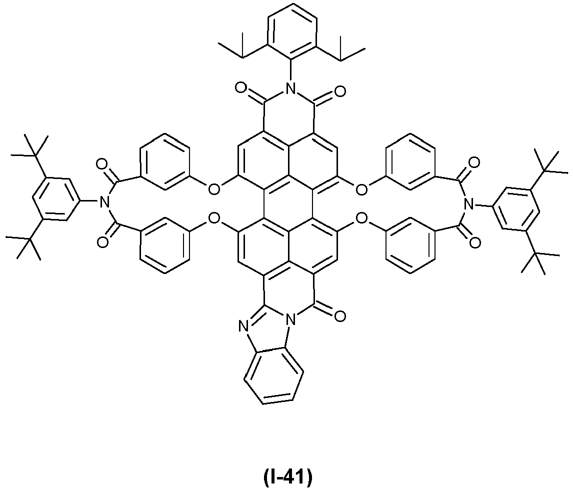

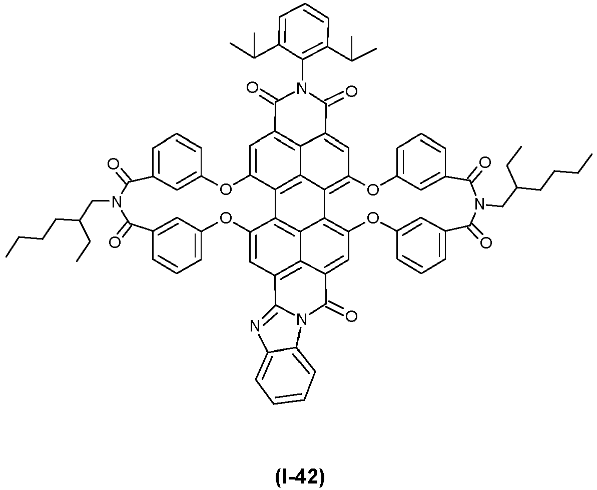

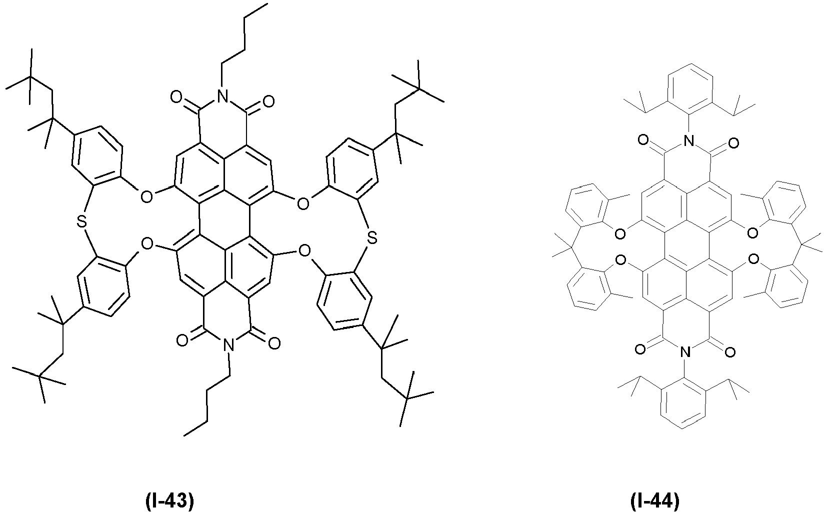

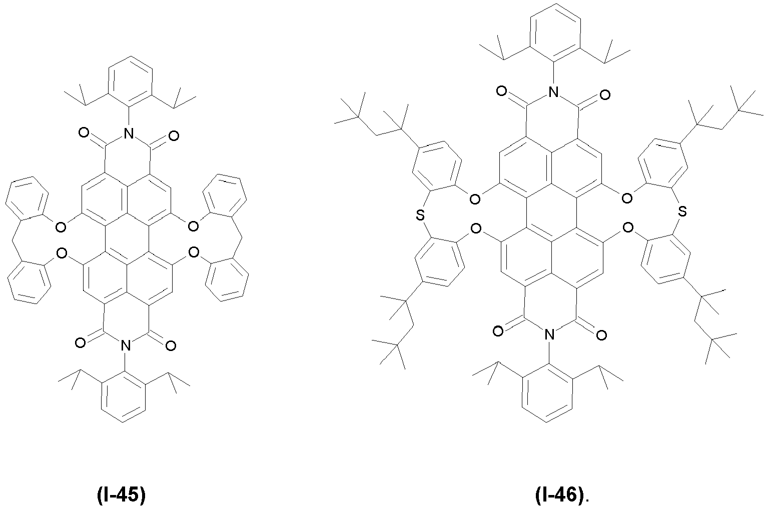

A second aspect of the present invention relates to a mixture comprising or consisting of two or more compounds of formula (I) as defined herein, wherein the mixture comprises compounds of formula (la) and (la') 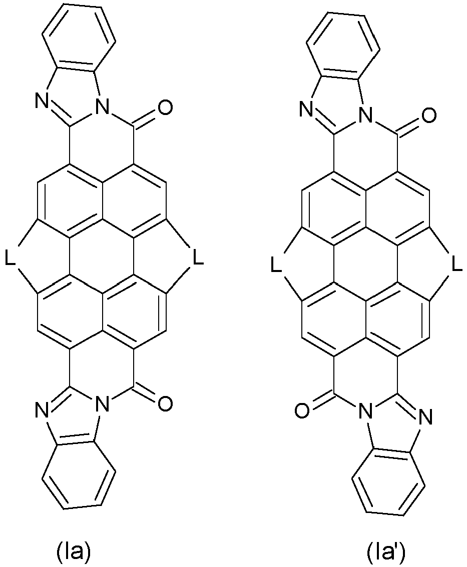 or wherein the mixture comprises compounds of formula (lb) and (lb') 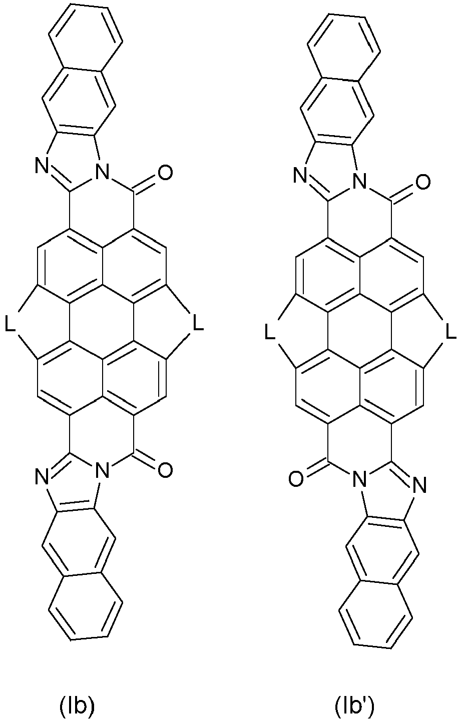 or wherein the mixture comprises compounds of formula (Ic) and (Ic') 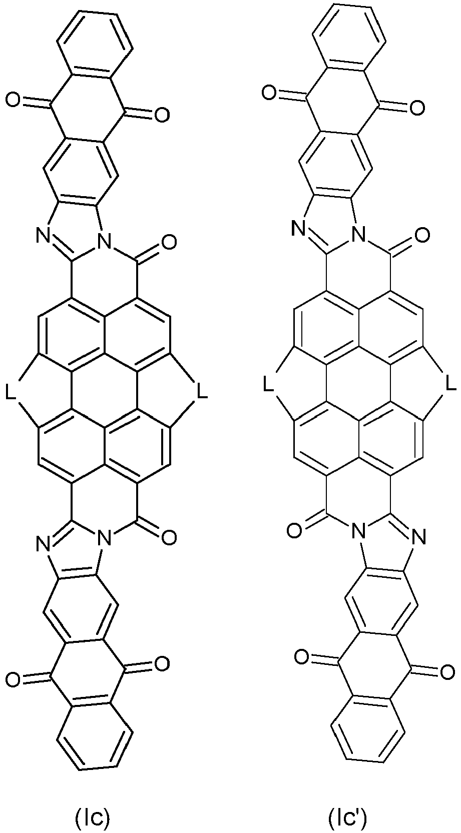 and wherein L is as defined herein, respectively.

Advantageously, in case the L residues are symmetrical, which is preferred, only two isomers (cis and trans) of the compounds of formula (I), wherein both X₁ and X₂ are selected from the group consisting of 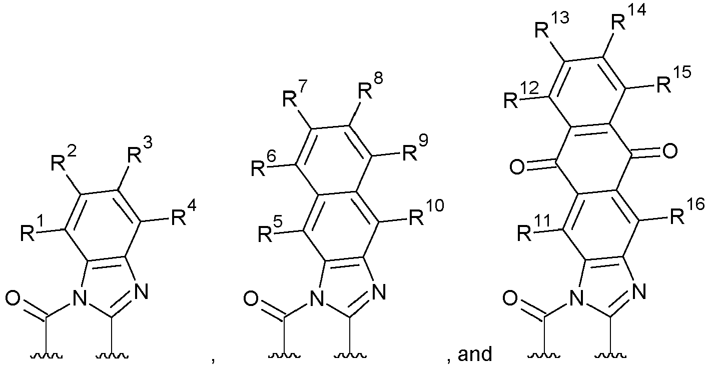 as defined herein, are obtained during synthesis. This is a significant improvement over the state of the art, e.g. described in the introduction of this text, where often five different isomers are formed, because it simplifies purification.

Preferably, the compound of formula (I) is a compound of formula (Id) 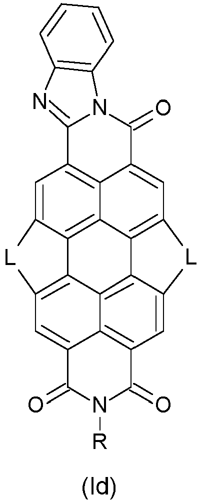 wherein R is selected from the group consisting of hydrogen, linear, cyclic, or branched alkyl with 1 to 24 carbon atoms, aryl, substituted aryl, heteroaryl, and substituted heteroaryl,
preferably wherein R is selected from 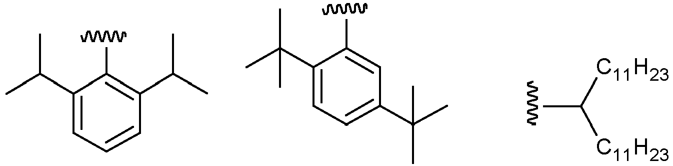 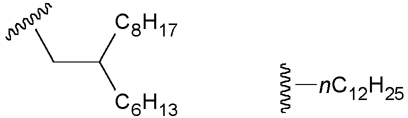 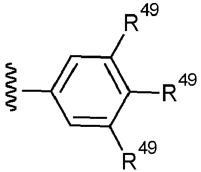 with R⁴⁹ = linear, cyclic or branched C12 alkyl or C12 alkoxy, and wherein L is as defined herein.

According to a preferred embodiment, the compound of formula (I) as defined herein or mixture of two, three or more compounds of formula (I) as defined herein absorbs light in the wavelength range of from 400 to 650 nm, preferably from 500 to 650 nm, most preferably from 500 to 600 nm, and has a maximum of emission in the wavelength range of from 550 to 750 nm, preferably from 550 to 700 nm, most preferably from 600 to 700 nm.

More preferably, the compound of formula (I) according the invention or mixture of two, three or more compounds of formula (I) according to the invention has a maximum of emission at a wavelength that is longer than the wavelength of the light that is absorbed by the compound.

Advantageously, especially compounds **(I-1)**, **(I-1')**, **(I-2)**, **(I-2')**, **(I-3)**, **(I-3')**, **(I-16)**, **(I-17)**, and **(I-43)** display low absorption in the UVA and blue spectral range (cf. **Table 2** below). It is significantly lower than the current benchmark of tetraphenoxy-substituted perylene tetracarboxylic diimide (Lumogen^{®} F Red 300), if one compares the main absorption around 600 nm with the absorption in the blue. Over the whole region of 400 to 500 nm the (parasitic) absorption of the compounds according to the present invention is typically by a factor >2 lower as compared to Lumogen^{®} F Red 300 (cf. **Fig. 2** with **(I-2)** and **(I-2')** and **Fig. 3** with **(I-16)** and **Table 2**). As outlined above, this is advantageous, because plants absorb in this spectral range to carry out photosynthesis.

According to a preferred embodiment of the compound of formula (I) or mixture according to the present invention, the maximum absorption of said compound or mixture in the spectral region of from 400 to 500 nm (blue spectral region) divided by the maximum absorption of said compound or mixture in the spectral region of from 550 to 650 nm (green spectral region) is equal to or less than 0.32.

A third aspect of the present invention relates to a material comprising or consisting of
(i) one or more compound(s) of formula (I) or a mixture as defined herein, and
(ii) one or more polymers selected from the group consisting of polyolefins, polystyrenes, polyethylenes, polyacrylates, polycarbonates, polyesters, polyurethanes, polyolefin copolymers, polyvinyl alcohols, polyvinyl esters, polyvinyl alkanals, polyvinyl ketals, polyamides, polyimides, polycarbonate blends, polyester blends, poly(meth)acrylates, preferably poly(methyl methacrylate) (PMMA), poly(meth)acrylate-styrene copolymer blends, poly(meth)acrylate-polyvinylidenedifluoride blends, styrene copolymers, polyethers, polyetherketones, polysulfones, polyvinyl chloride, ethylene tetrafluoro ethylene (ETFE), ethylene copolymers, preferably ethylene vinyl acetate and ethylene butyl acrylate, polyvinyl butyral, and ethylene vinyl alcohol (EVOH), and
(iii) optionally, one or more additives selected from the group consisting of plasticisers, UV absorbers, UV stabilisers, processing and slip agents, anti-drip additives, colourants, optical brighteners, antioxidants, light stabilisers, hindered amine light stabilisers, nickel quenchers, metal deactivators, reinforcing and filling materials, anti-condensation agents, biocides, acid scavengers, antistatic agents, IR absorbers, preferably for long-wavelength IR radiation, more preferably kaolin, antiblocking agents, preferably silicon dioxide, light scatterers, preferably selected from the group consisting of titanium dioxide, magnesium oxide, calcium carbonate, barium sulfate, boron nitride, SiOz particles, glass hollow spheres, silicone particles, and mica particles, and inorganic and organic reflectors.

According to one embodiment of the material according to the invention, components (i), (ii), and (iii), if present, are mixed with one another and present in one layer of the material. Several of such layers of the material may be laminated together. One or more of such layers of the material may also be laminated with e.g. one or more sheets of other materials.

According to another embodiment of the material according to the invention, the material is layered, wherein the components of the material are present in separate layers.

The one or more compound(s) of formula (I) or mixture according to the invention (component (i) of the material) may be present in one, several or all of the layers of the material. Preferably, the one or more compound(s) of formula (I) or mixture according to the invention (component (i) of the material) is/are present in one or more inside layer(s) of the material, i.e. in one or more layer(s) that are not facing the outside of the material. This embodiment is particularly advantageous, because the outside layers of the material, which preferably comprise or consist of the polymers as defined in component (ii) of the material, can thus protect the inside layers of the material, which comprise the one or more compound(s) of formula (I) or mixture according to the invention (component (i) of the material).

In case the material according to the present invention is layered, it may comprise one, two, three, four, five, six, seven, eight or more layers.

A fourth aspect of the present invention relates to a material comprising or consisting of
(i) one or more compound(s) of formula (I) or a mixture as defined herein, and
(ii) one or more (silicate) glasses, preferably in the form of glass panes or sheets.

According to one embodiment of the material according to the invention, the one or more compound(s) of formula (I) or mixture (component (i) of the material) are coated onto the surface of a glass, preferably a glass pane or sheet.

According to another embodiment of the material according to the invention, the one or more compound(s) of formula (I) or mixture (component (i) of the material) are embedded between two glass panes or sheets. They may be coated onto the inside surface of one or both of the two glass panes or sheets.

It is also possible to combine the third and fourth aspect, for instance, to arrange one or more layer(s) of the material(s) according to the third aspect between one, two or more (silicate) glass panes or sheets.

Preferably, the material according to the present invention is in the form of a film, foil, pane, fabric, sheet, panel, polymer laminate, woven polymer fabric roof cover, woven polymer fabric floor cover, net, particle, or screen, preferably is a sheet, panel or film.

In a specific embodiment of the material according to the invention, sheets - preferably comprising polycarbonate and/or poly(methyl methacrylate) - may be in the form of a single layer and also be multi-walled.

If the material according to the present invention is in the form of particles, the volume average particle diameter of the particles is preferably in the range of from 0.01 to 50 µm, more preferably 0.02 to 20 µm, most preferably 0.04 to 10 µm. The volume average particle diameter can be measured, for instance, by a LS 13320 Laser Diffraction Light Scattering Particle Size Analyser.

According to a preferred embodiment, the material according to the present invention comprises a total amount of from 0.001 to 5 wt.-%, preferably of from 0.01 to 1 wt.-%, more preferably of from 0.01 to 0.5 wt.-%, based on the total weight of the material, of the one or more compound(s) of formula (I).

A material according to the present invention preferably additionally comprises one or more further fluorescent dye(s) that are different from the compound(s) of formula (I) as defined herein.

According to a fifth aspect, the present invention further relates to a mixture comprising or consisting of one, two, three, four, or more of the compounds of formula (I) according to the present invention. The mixture may additionally comprise one or more further fluorescent dye(s) that are different from said compound(s) of formula (I).

Preferably, the one or more further fluorescent dyes is/are selected from the group consisting of fluorescent perylene, naphthaline, pyrene, anthracene, bodipy, rhodamine, triarylmethane, merocyanine, thioxanthene, xanthene, coumarin, thioindigoid, naphthalimide, diketopyrrolopyrrol, and methine dyes.

A sixth aspect of the present invention relates to a method for converting light comprising or consisting of the following step:
(i) Irradiating one or more compound(s) of formula (I) as defined herein or a material or mixture as defined herein with light of a wavelength in the range of from 350 to 750 nm, preferably of from 400 to 700 nm, more preferably of 500 to 600 nm.

Within the context of the present text, irradiating the one or more compound(s) of formula (I) or material or mixture as defined herein with light in the defined wavelength range does not exclude that the compound(s) or material or mixture is/are also irradiated with light outside of the defined wavelength range at the same time. In other words, the compound(s) of formula (I) or material or mixture as defined herein may be irradiated with light of a wavelength outside of the defined wavelength range at the same time, as long as they also are irradiated with light at a wavelength in the defined wavelength range.

According to a preferred embodiment, the method according to the present invention further comprises the following consecutive step:
(ii) Irradiating one or more plant(s) with light emitted from the one or more compound(s) of formula (I) or from the material or mixture irradiated in step (i), preferably wherein the light emitted from said compound(s) or mixture or material has a wavelength in the range of from 550 to 750 nm, preferably in the range of 550 to 700 nm, most preferably from 600 to 700 nm.

Preferably, the method according to the invention is applied in the field of horticulture, agriculture, photovoltaics, displays, lighting, bio-imaging, bio-sensing, signage, preferably road signs, security, optical sensors, anti-counterfeiting, and the colouration of plastics.

The seventh aspect of the present invention describes a method for producing one or more compound(s) of formula (I) as defined herein, wherein both X₁ and X₂ are selected from the group consisting of 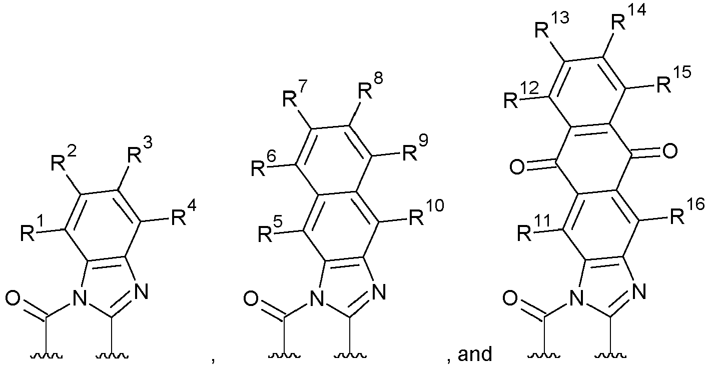 as defined herein.

Particularly, the seventh aspect of the present invention relates to a method for producing one or more compound(s) of formula (I) as defined herein, wherein the method comprises or consists of the following steps:
(a) Optionally, providing or producing a compound of formula (II) (3,4,9,10-perylenetetracarboxylic dianhydride) 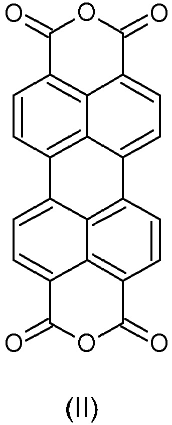
(b) optionally, chlorination of the compound of formula (II) provided or produced in step (a), if present, with a chlorination agent to obtain a compound of formula (III),
   or
   providing a compound of formula (III) 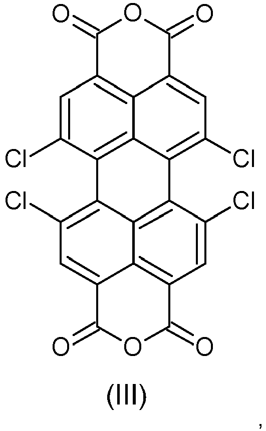
(c) reacting the compound of formula (III) obtained or provided in step (b) with, preferably 2-5 equivalents of, a diamine selected from the group consisting of 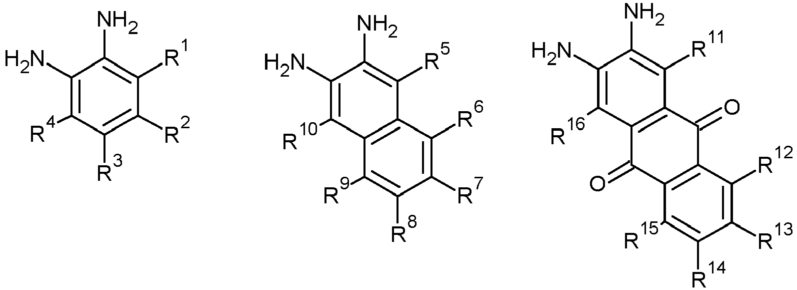 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues,
   to obtain one or more compound(s) of formula (IV) 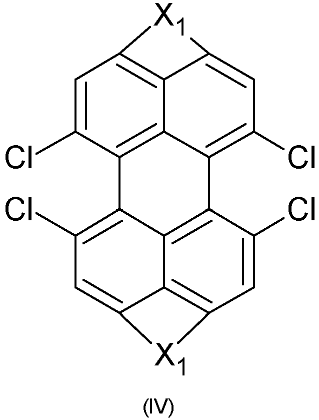 wherein X₁ is selected from the group consisting of 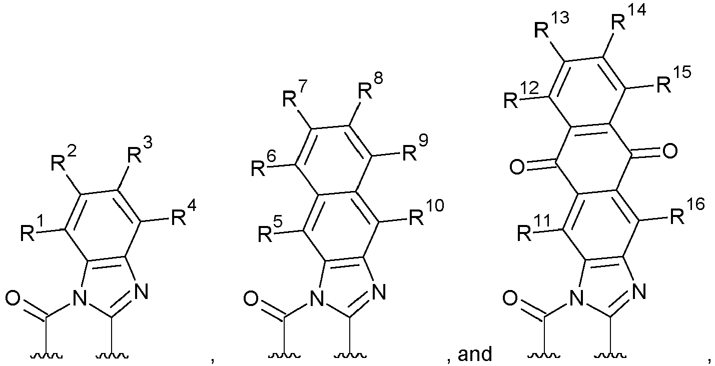 and wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues,
(d) reacting the one or more compound(s) of formula (IV) obtained in step (c) with 2,2'-biphenol or a derivative thereof, preferably selected from the group consisting of
   (i) 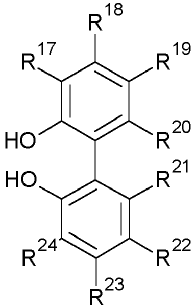 wherein R¹⁷ to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
      or wherein R¹⁷ to R¹⁹ and R²² to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues, and R²⁰ and R²¹ are connected with one another by one or more bridging atoms,
   (ii) 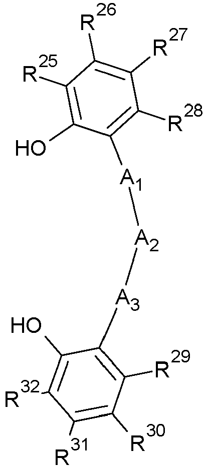 wherein R²⁵ to R³² are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
      and one, two or three of A₁ to A₃ are present, wherein A₁ to A₃, if present, are independently selected from the group consisting of carbon, carbonyl, nitrogen, oxygen, sulfur, sulfoxide, and sulfone, wherein when any of A₁ to A₃ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, and/or wherein when A₁ and A₂ are present and A₃ is not present, A₁ and A₂ can optionally be carbon atoms that are part of a five or six membered (carbon) ring system optionally comprising one or two oxygen atoms in said ring system, and/or wherein when A₁ to A₃ are present, A₁ to A₃ can optionally be carbon atoms that are part of a five or six membered (carbon) ring system,
   (iii) 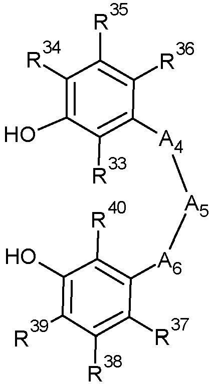 wherein R³³ to R⁴⁰ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues, preferably wherein R³³ and R⁴⁰ are hydrogen residues,
      and one, two or three of A₄ to A₆ are present, wherein A₄ to A₆, if present, are independently selected from the group consisting of carbon, carbonyl, nitrogen, oxygen, sulfur, sulfoxide, and sulfone, wherein when any of A₄ to A₆ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl,
   (iv) 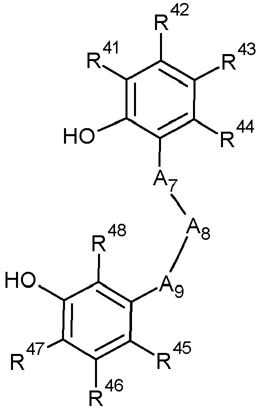 wherein R⁴¹ to R⁴⁸ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues, preferably wherein R⁴¹, R⁴², R⁴⁴, R⁴⁵, R⁴⁷ and R⁴⁸ are hydrogen residues and R⁴³ and R⁴⁶ are independently selected from the group consisting of hydrogen, n-dodecyl, tert-butyl, and tert-octyl,
      and one, two or three of A₇ to A₉ are present, wherein A₇ to A₉, if present, are independently selected from the group consisting of carbon, carbonyl, nitrogen, oxygen, sulfur, sulfoxide, and sulfone, wherein when any of A₇ to A₉ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl,
      and optionally
(e) purification of the product(s) obtained in step (d).

Advantageously, following the method for producing one or more compound(s) of formula (I) as defined herein according to the seventh aspect of the present invention, only two isomers (cis and trans) of the compounds of formula (I), wherein both X₁ and X₂ are selected from the group consisting of 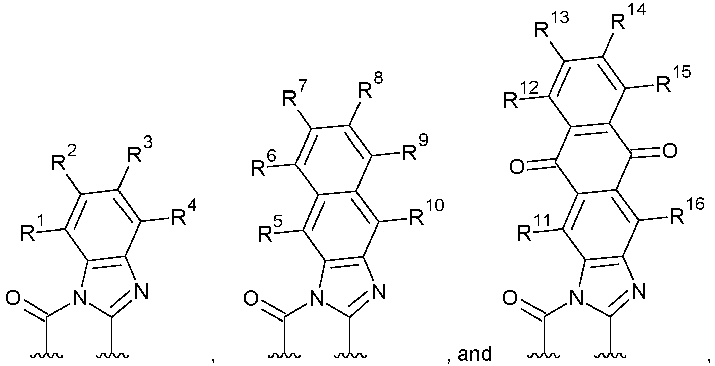 as defined herein, are obtained during synthesis.

Preferably, with regard to the diamine reacted with the compound of formula (III) in step (c) of the method according to the invention, the following applies:
According to one preferred embodiment, all of R¹ to R⁴ represent hydrogen residues.
According to another preferred embodiment, all of R⁵ to R¹⁰ represent hydrogen residues.
According to another preferred embodiment, all of R¹¹ to R¹⁶ represent hydrogen residues.
Preferably, all of R¹ to R¹⁶ represent hydrogen residues.

According to another preferred embodiment, R¹ and R⁴ are hydrogen residues and R² and R³ are independently selected from the group consisting of linear or branched C1-C18-alkyl, C3-C8-cycloalkyl, C3-C8-cycloalkyl substituted by 1, 2 or 3 C1-C18-alkyl residues, C6-C10-aryl, and C6-C10-aryl substituted by 1, 2 or 3 C1-C12-alkyl residues, and linear, branched or cyclic C1-C18 alkoxy residues.

According to another preferred embodiment, R⁵ and R¹⁰ are hydrogen residues and R⁶ to R⁹ are independently selected from the group consisting of linear or branched C1-C18-alkyl, C3-C8-cycloalkyl, C3-C8-cycloalkyl substituted by 1, 2 or 3 C1-C18-alkyl residues, C6-C10-aryl, and C6-C10-aryl substituted by 1, 2 or 3 C1-C12-alkyl residues, and linear, branched or cyclic C1-C18 alkoxy residues.

According to another preferred embodiment, R¹¹ and R¹⁶ are hydrogen residues and R¹² to R¹⁵ are independently selected from the group consisting of linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues.

According to another preferred embodiment, one, two, three, four or more of R¹ to R¹⁶ (or of R¹ to R⁴ or of R⁵ to R¹⁰ or of R¹¹ to R¹⁶) independently are selected from the group consisting of linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues, while the remaining ones of R¹ to R¹⁶ (or of R¹ to R⁴ or of R⁵ to R¹⁰ or of R¹¹ to R¹⁶) represent hydrogen.

Preferably, the diamine reacted with the compound of formula (III) in step (c) of the method according to the invention is selected from the group consisting of

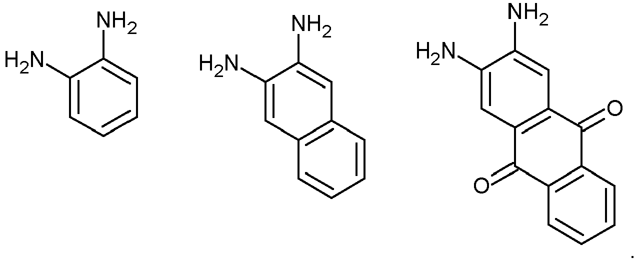

According to a preferred embodiment, the compounds of formula (lVa) and (IVa') are obtained in step (c) of the method according to the present invention:

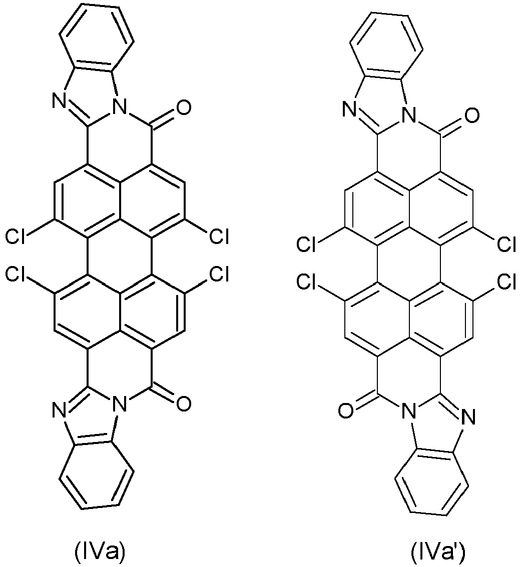

According to another preferred embodiment, the compounds of formula (IVb) and (IVb') are obtained in step (c) of the method according to the present invention:

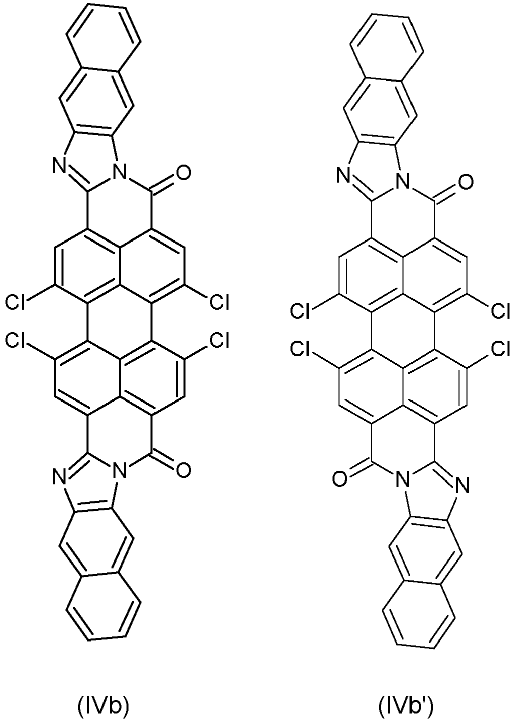

According to another preferred embodiment, the compounds of formula (IVc) and (IVc') are obtained in step (c) of the method according to the present invention:

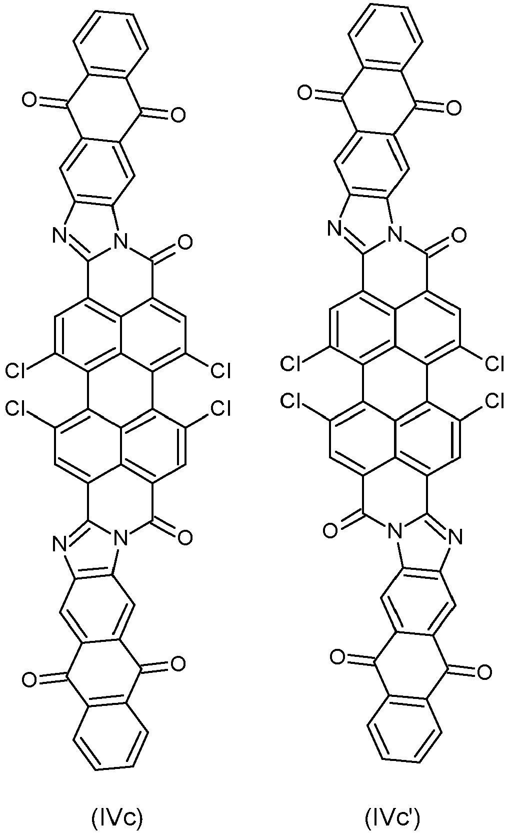

What has been stated herein, especially under the first aspect of the present invention, with regard to R¹⁷ to R⁴⁸ applies *mutatis mutandis* to R¹⁷ to R⁴⁸ of this seventh aspect of the present invention.

Preferably, the one or more compound(s) of formula (IV) obtained in step (c) of the method according to the present invention is/are reacted with 2,2'-biphenol or a derivative thereof selected from the group consisting of

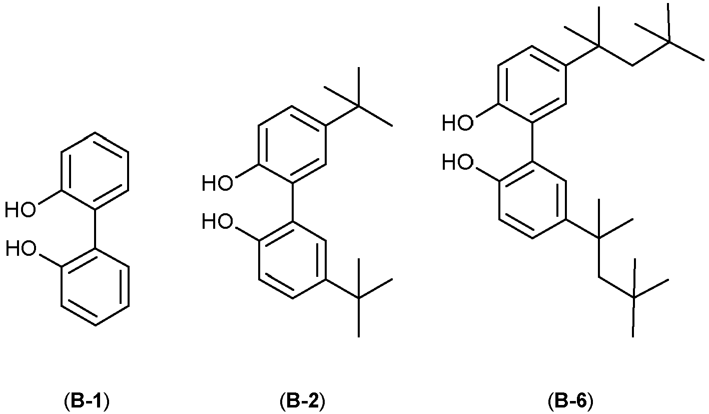

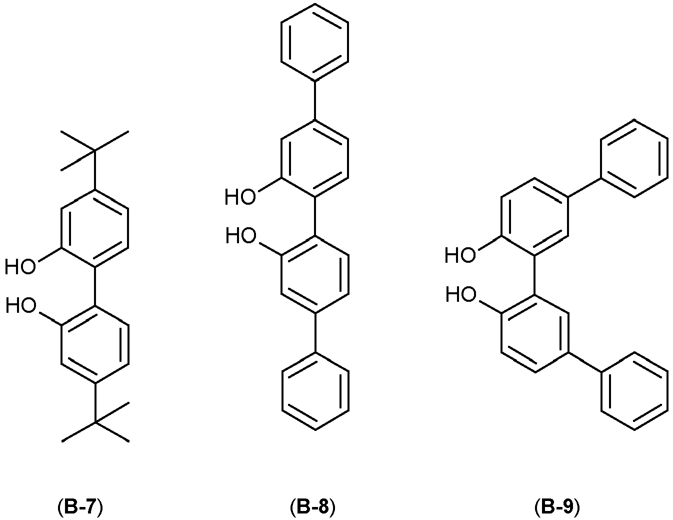

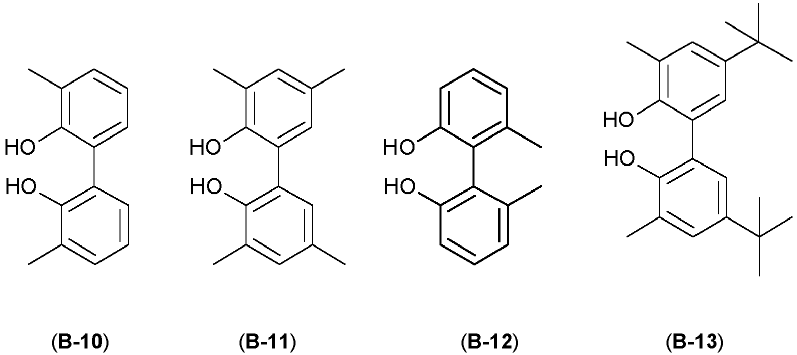

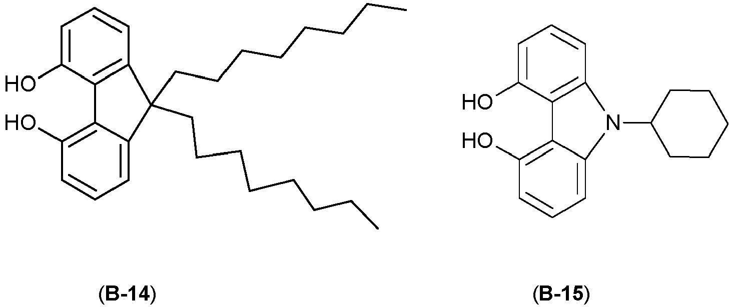

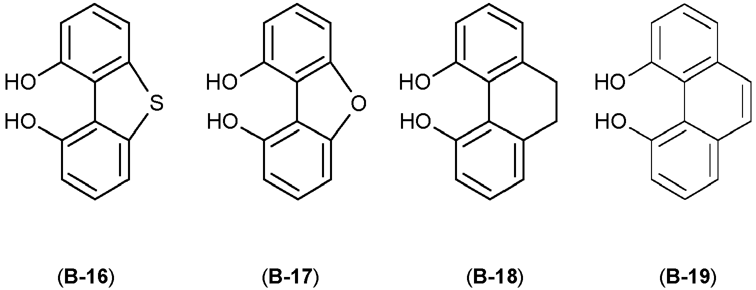

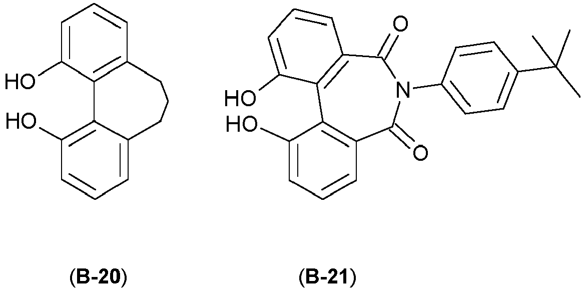

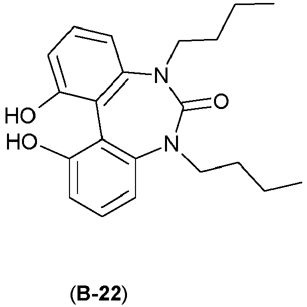

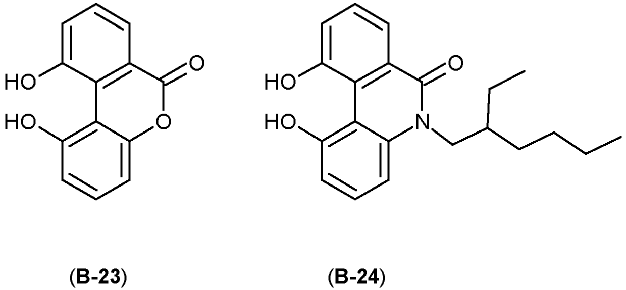

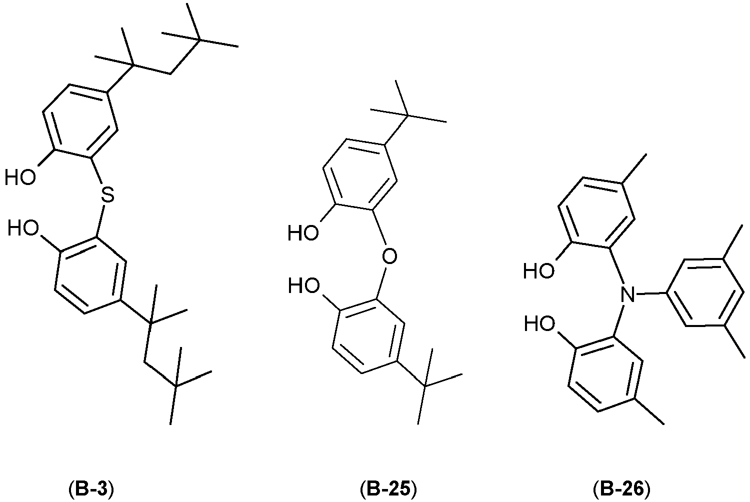

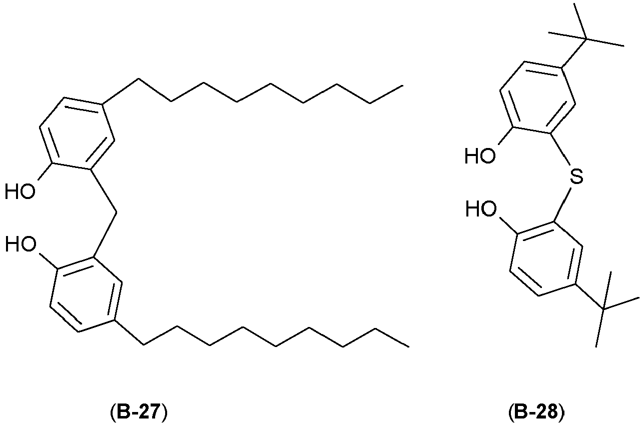

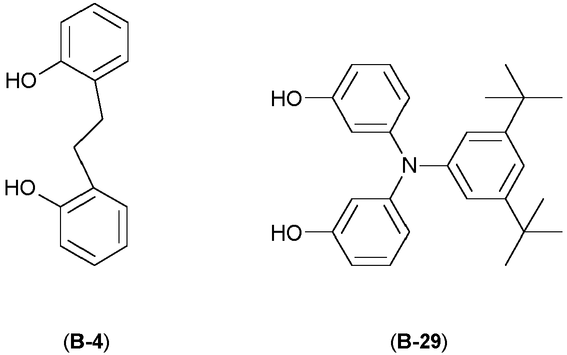

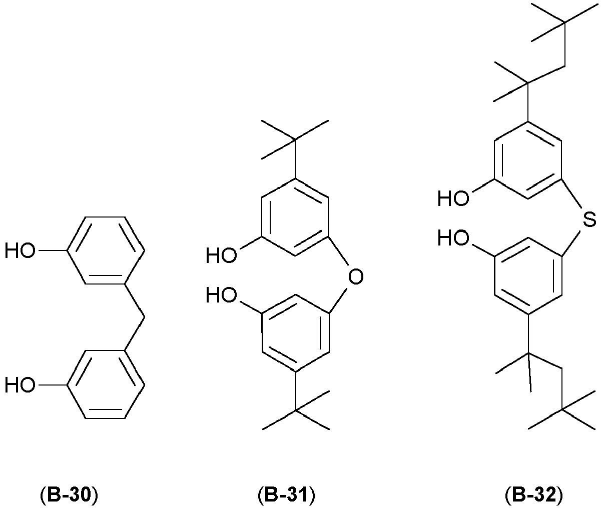

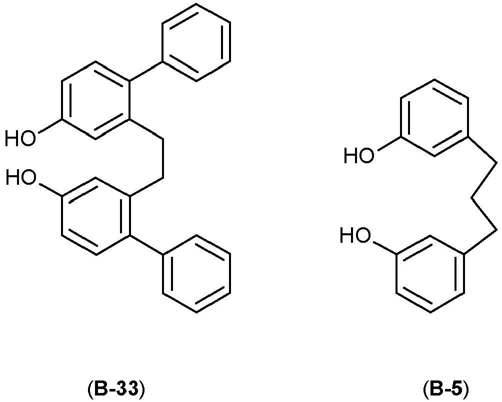

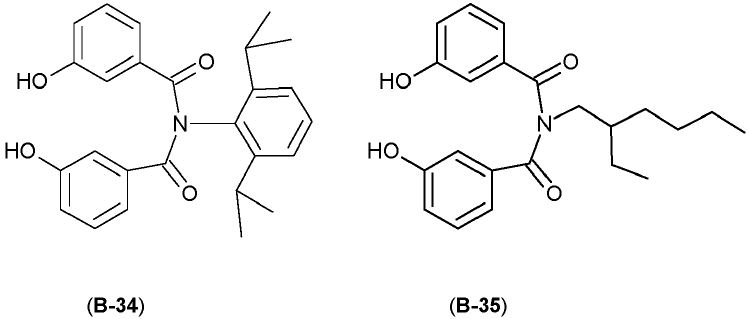

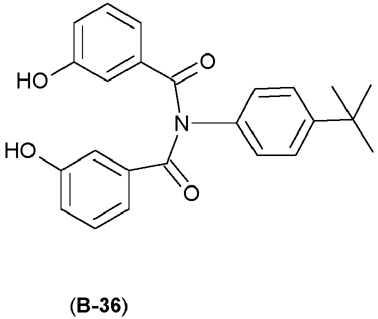

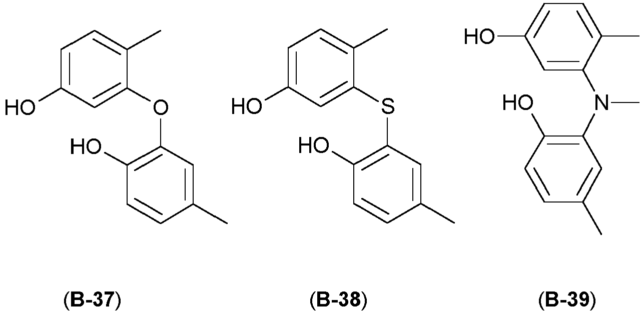

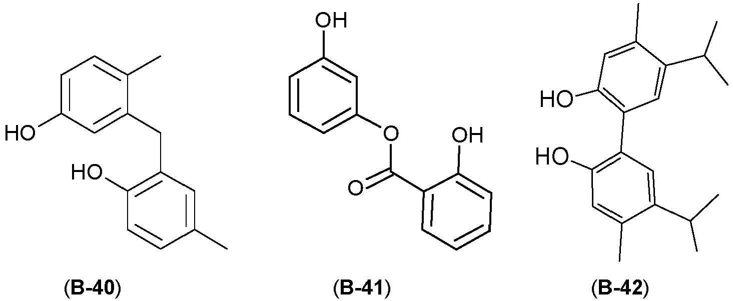

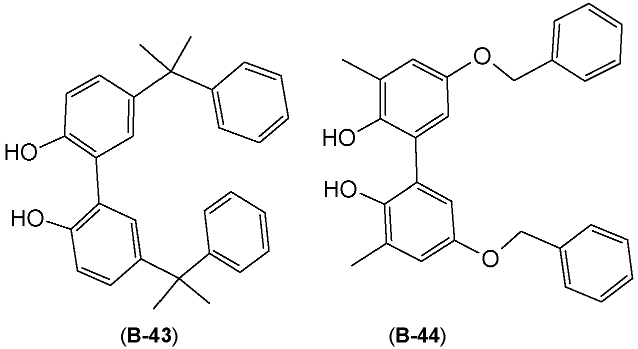

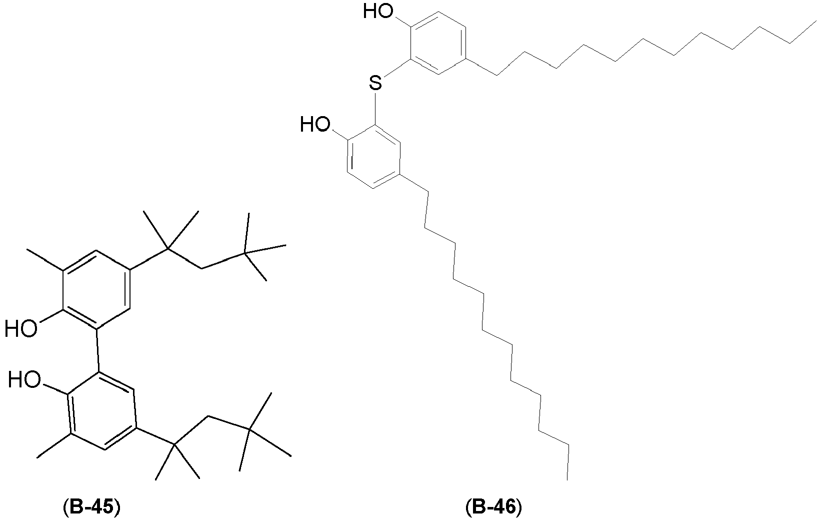

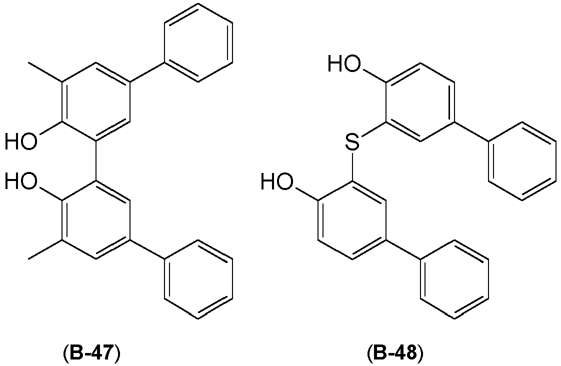

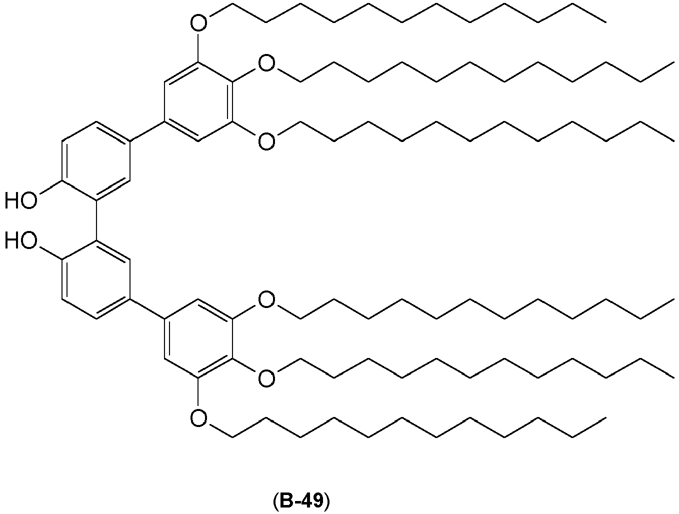

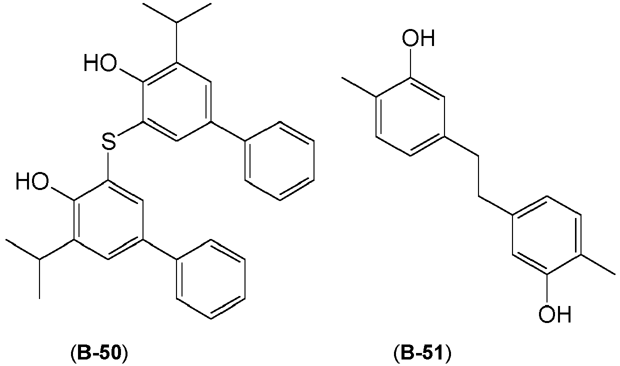

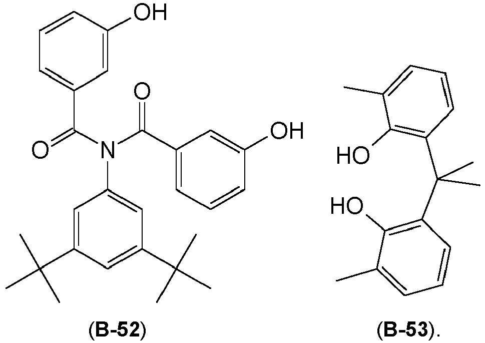

The eighth aspect of the present invention describes a method for producing one or more compound(s) of formula (I) as defined herein, wherein X₁ is selected from the group consisting of 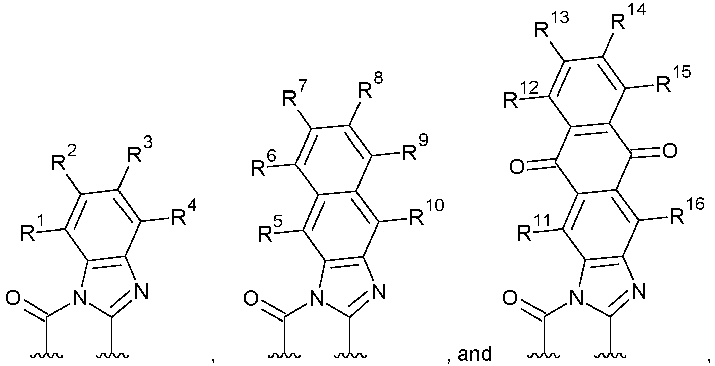 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues, and X₂ is 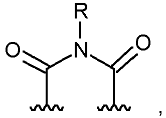 wherein R independently is selected from the group consisting of hydrogen, linear, cyclic, or branched alkyl with 1 to 24 carbon atoms, aryl, substituted aryl, heteroaryl, and substituted heteroaryl, preferably wherein R independently is selected from the group consisting of 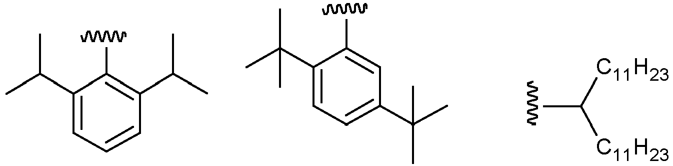 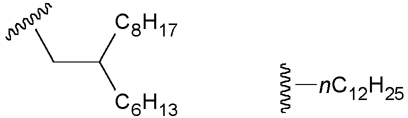 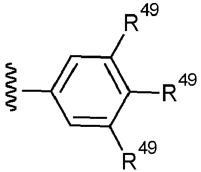 with R⁴⁹ = linear, cyclic or branched C12 alkyl or C12 alkoxy

Particularly, the eighth aspect of the present invention relates to a method for producing one or more compound(s) of formula (I) as defined herein, wherein the method comprises or consists of the following steps:
(a) Optionally, providing or producing a compound of formula (II) (3,4,9,10-perylenetetracarboxylic dianhydride) 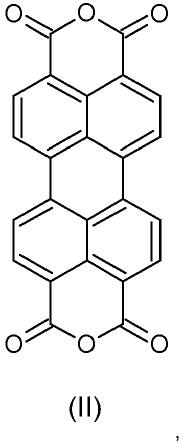
(b) optionally, chlorination of the compound of formula (II) provided or produced in step (a), if present, with a chlorination agent to obtain a compound of formula (III),
   or
   providing a compound of formula (III) 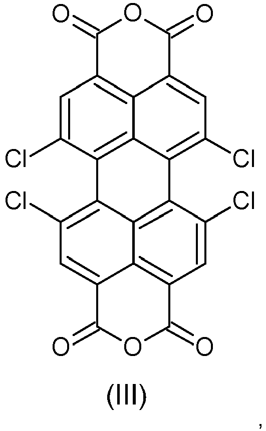
(c) reacting the compound of formula (III) obtained or provided in step (b) with a diamine selected from the group consisting of 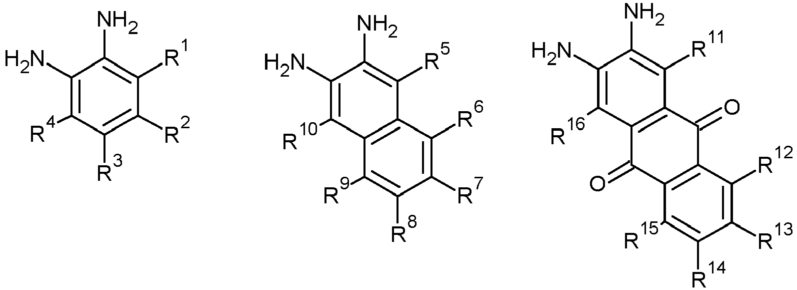 wherein R'to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues,
   preferably wherein the molar ratio of the compound of formula (III) to the diamine at the start of the reaction is about 1 : 0.9-1.1,
(d) reacting the product of step (c) with an amine, preferably wherein the amine is selected from the group consisting of ammonia, linear, cyclic, or branched alkylamine with 1 to 24 carbon atoms, arylamine, substituted arylamine, heteroarylamine, and substituted heteroarylamine,
   preferably with an amine selected from the group consisting of 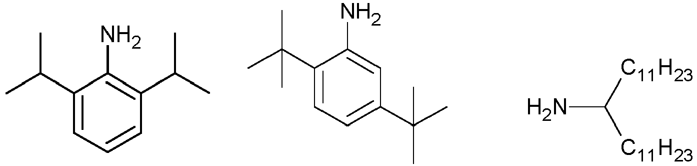 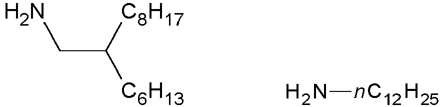 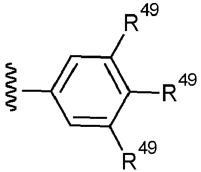 with R⁴⁹ = linear, cyclic or branched C12 alkyl or C12 alkoxy,
(e) reacting the product of step (d) with 2,2'-biphenol or a derivative thereof, preferably selected from the group consisting of
   (i) 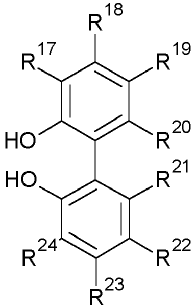 wherein R¹⁷ to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
      or wherein R¹⁷ to R¹⁹ and R²² to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues, and R²⁰ and R²¹ are connected with one another by one or more bridging atoms,
   (ii) 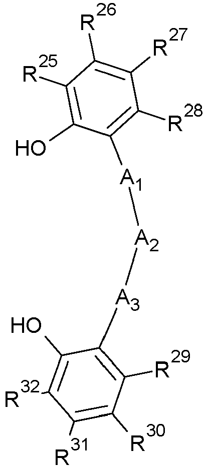 wherein R²⁵ to R³² are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
      and one, two or three of A₁ to A₃ are present, wherein A₁ to A₃, if present, are independently selected from the group consisting of carbon, carbonyl, nitrogen, oxygen, sulfur, sulfoxide, and sulfone, wherein when any of A₁ to A₃ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, and/or wherein when A₁ and A₂ are present and A₃ is not present, A₁ and A₂ can optionally be carbon atoms that are part of a five or six membered (carbon) ring system optionally comprising one or two oxygen atoms in said ring system, and/or wherein when A₁ to A₃ are present, A₁ to A₃ can optionally be carbon atoms that are part of a five or six membered (carbon) ring system,
   (iii) 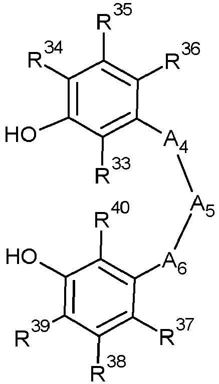 wherein R³³ to R⁴⁰ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues, preferably wherein R³³ and R⁴⁰ are hydrogen residues,
      and one, two or three of A₄ to A₆ are present, wherein A₄ to A₆, if present, are independently selected from the group consisting of carbon, carbonyl, nitrogen, oxygen, sulfur, sulfoxide, and sulfone, wherein when any of A₄ to A₆ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl,
   (iv) 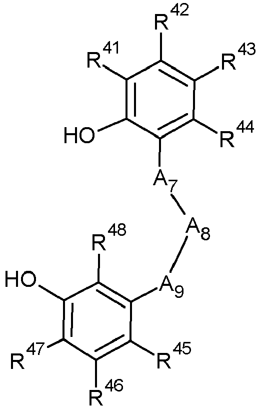 wherein R⁴¹ to R⁴⁸ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues, preferably wherein R⁴¹, R⁴², R⁴⁴, R⁴⁵, R⁴⁷ and R⁴⁸ are hydrogen residues and R⁴³ and R⁴⁶ are independently selected from the group consisting of hydrogen, *n*-dodecyl, *tert*-butyl, and *tert*-octyl,
   and one, two or three of A₇ to A₉ are present, wherein A₇ to A₉, if present, are independently selected from the group consisting of carbon, carbonyl, nitrogen, oxygen, sulfur, sulfoxide, and sulfone, wherein when any of A₇ to A₉ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, and optionally
(f) purification of the product(s) obtained from step (e).

What has been stated above for the other aspects of the present invention, especially for the first and seventh aspect of the present invention, applies *mutatis mutandis* to the eighth aspect of the present invention.

Preferably, the product of step (d) is reacted with 2,2'-biphenol or a derivative thereof selected from the group as defined in terms of the seventh aspect above.

According to a preferred embodiment of the methods according to the invention, the chlorination agent reacted in step (b), if present, is selected from the group consisting of Cl₃CCN, Cl₂, N-chlorosuccinimide, SbCl₅, SO₂Cl₂, and ClSO₃H.

A ninth aspect of the present invention relates to the use of one or more compound(s) of formula (I) as defined herein or of a material or mixture as defined herein as a light converter, preferably in the field of horticulture, agriculture, photovoltaics, displays, lighting, bio-imaging, bio-sensing, signage, preferably road signs, security, anti-counterfeiting, optical sensors, and the colouration of plastics.

According to a preferred embodiment, a compound of formula (I) as defined herein or a material or mixture as defined herein is used to increase crop yields, improve crop quality, optimize crop growth periods and/or otherwise have a positive impact on the crop by covering the plants with a material as defined herein (e.g. a plastic film).

Preferably, a compound of formula (I) or material or mixture according to the present invention emits light that is shifted to a higher wavelength compared to the light absorbed by said compound of formula (I) or material or mixture.

More preferably, the maximum of emission of the light emitted by a compound of formula (I) according to the present invention is shifted to a higher wavelength compared to the maximum of absorption of the light absorbed by said compound of formula (I).

Preferably, the compound or material or mixture according to the present invention absorbs light in the wavelength range of from 400 to 650 nm, preferably from 500 to 650 nm, most preferably from 500 to 600 nm, and emits light in the wavelength range of from 550 to 750 nm, preferably from 550 to 700 nm, most preferably from 600 to 700 nm.

**Figure 2****:** Absorption and photoluminescence of a mixture of **(I-2)** and **(I-2').** a, b = chlorophyll spectra; c = Lumogen^{®} F Red 300 absorption (dashed grey), max. norm = 1.0; d = Lumogen^{®} F Red 300 emission (dotted grey); e = absorption of mixture of **(I-2)** and **(I-2')** (long dash black), max. norm= 1.3; f = emission of mixture of **(I-2)** and **(I-2')** (dotted black). The (parasitic) absorption of Lumogen^{®} F Red 300 in the range of 400-500 nm is more than 2x stronger compared to the absorption of a mixture of **(I-2)** and **(I-2')** in this region.

**Figure 3****:** Absorption and photoluminescence of **(I-16).** a, b = chlorophyll spectra; c = Lumogen^{®} F Red 300 absorption (dashed grey), max. norm = 1.0; d = Lumogen^{®} F Red 300 emission (dotted grey); e = absorption of **(I-16)** (long dash black), max. norm = 1.3; f = emission of **(I-16)** (dotted black). The (parasitic) absorption of Lumogen^{®} F Red 300 in the range of 400-500 nm is more than 2x stronger compared to the absorption of **(I-16)** in this region.

Preferred embodiments of the compound of formula (I) according to the invention correspond to or can be derived from the preferred embodiments of the mixture according to the invention, which are explained above, or *vice versa.*

Preferred embodiments of the compound of formula (I) according to the invention correspond to or can be derived from the preferred embodiments of the material according to the invention, which are explained above, or *vice versa.*

Preferred embodiments of the compound of formula (I) according to the invention correspond to or can be derived from the preferred embodiments of the methods according to the invention, which are explained above, or *vice versa.*

Preferred embodiments of the compound of formula (I) according to the invention correspond to or can be derived from the preferred embodiments of the use according to the invention, which are explained above, or *vice versa.*

What has been defined herein as preferred for one embodiment of the invention also applies to other embodiments of the invention, as long as technically sensible.

Moreover, the embodiments described herein can be arbitrarily combined with one another as long as the combination is technically sensible.

The invention will now be described in more detail hereinafter with references to the examples. Further aspects of the present invention are disclosed in the accompanying claims.

### Examples

### 1. Commercially available educts:

1,6,7,12-Tetrachloroperylene tetracarboxylic acid dianhydride (Fluorochem LTD), o-phenylenediamine (TCI), 2,6-diisopropylaniline (TCI), n-butylamine (TCI), 2,2'-dihydroxybiphenol **(B-1)** (TCI), 2,2'-thiobis(4-tert-octylphenol) **(B-3)** (TCI).

2-[2-(2-hydroxyphenyl)ethyl]phenol **(B-4)** (FCH Group Reagents for Synthesis, Latvia, https://www.chem-space.com).

### 2. Synthesis of educts (B-2) and (B-5):

2,2'-Dihydroxy-5,5'-bis(tert-butyl)biphenyl **(B-2)** was synthesized from 3,3',5,5'-tetra-tert-butyl-2,2'-dihydroxybiphenyl (TCI) according the procedure described in the European Journal of Organic Chemistry 2008, 4, 684-692 (https://doi.org/10.1002/ejoc.200700763).

3-[3-(3-hydroxyphenyl)propyl]phenol **(B-5)** was synthesized from 3-acetyl-phenol and 3-hydroxy-benzaldehyde (both Sigma-Aldrich) by a Claisen-Schmidt condensation similar to the procedure in the Journal of the Japan Petroleum Institute, 51, 298-308 (2008) (https://doi.org/10.1627/jpi.51.298) and a subsequent exhaustive hydrogenation in EtOH with 10 wt.% Pd/C following the description in Antioxidants 2021, 10, 512 (https://doi.org/10.3390/antiox10040512).

### 3. Synthesis of perylene intermediates:

1,6,7,12-tetrachloroperylene bisbenzimidazole **(E-1)** was synthesized following the protocol disclosed in US 8,304,645 82 by treating 1,6,7,12-tetrachloroperylene bisanhydride with 1,2-diaminobenzene in refluxing propionic acid for 6 h, filtering the solids, washing with propionic acid, water and methanol, resulting in 94 % yield. Compound **(E-1)** is a mixture of syn and anti regioisomers and was used in the next steps without purification.

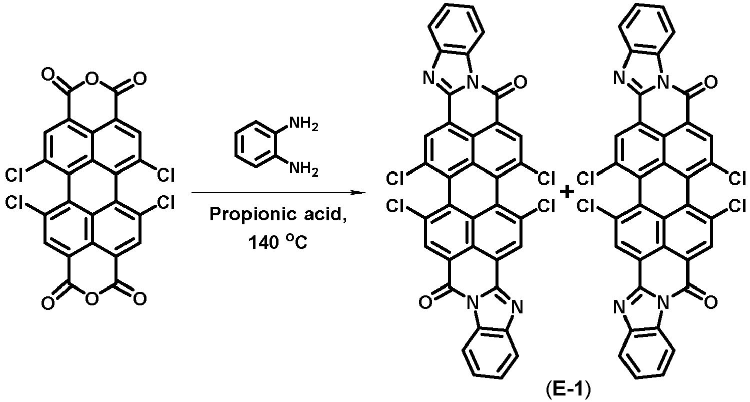

### 4. Synthesis of N-(2,6-diisopropylphenyl)-1,6,7,12-tetrachloroperylene-3,4,9,10-tetracarboxy monoimide monobenzimidazole (E-2) (cf. Example 1 of US 8,304,645):

1,6,7,12-Tetrachloroperylene tetracarboxylic acid dianhydride (3 g, 5.66 mmol) and 1,2-phenylenediamine (0.612 g, 5.66 mmol) were added to 150 mL of dimethylformamide. The resulting mixture was stirred at 140 °C for 6 hours. Afterwards, 2,6-diisopropylaniline (1.423 mL, 6.79 mmol) was added and the mixture was stirred for an additional 12 hours at 150 °C. The mixture was allowed to cool to room temperature and poured into water (150 mL). The resulting precipitate was collected by filtration and then washed successively with water (3 × 50 mL) and ethanol (3 × 30 mL). It was dried in a vacuum oven at 35 °C for 48 h to afford 3.97 g of the crude product. The crude product was purified by column chromatography using 3:2 v/v CH₂Cl₂/n-hexane as an eluent to obtain intermediate **(E-2)** (0.52 g, 12.1 %). Mass spectrometrical analysis of **(E-2):** [M⁺] exact mass = 759.07, MS (ESI⁺) = 761.74.

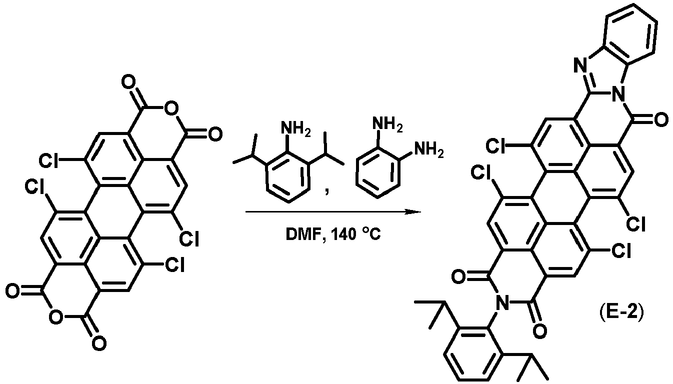

### 5. Synthesis of N,N'-dibutyl-1,6,7,12-tetrachloro perylenetetracarboxy-3,4:9,10-diimide (E-3):

**(E-3)** was synthesized as described in J. Org. Chem. 2002, 67, 9, 3037-3044 (https://doi.org/10.1021/jo011133I).

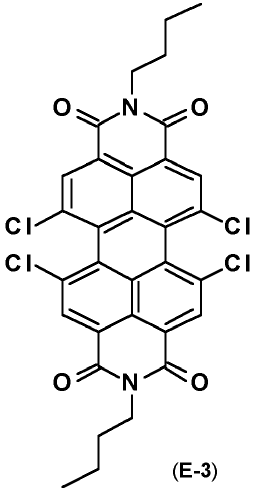

### 6. Synthesis of compounds of formula (I) and mixtures thereof:

**Table 1: General Procedure: A mixture of W-1 g of the tetrachloro-perylene compound ((E-1), (E-2) or (E-3)), W-2 g of the bis-phenol ((B-1), (B-2), (B-3), (B-4) or (B-5)), and W-3 g K₂CO₃ were suspended in V-1 mL of N-methyl-pyrrolidone (NMP) and stirred under argon at 120 °C for 24 h and then at 140 °C for T-1 h. After cooling to room temperature, the reaction mixture was poured into 1 M HCl under stirring. The solid was separated by filtration and washed successively with water and methanol. The resulting solid was dried in a vacuum oven at 35 °C for 48 h to afford Y-1 g of the crude product. The crude product was purified by column chromatography on silica gel using 1:1 v/v CH₂Cl₂/n-hexane or 2:3 v/v toluene/n-hexane or 1:2:22 v/v acetone/toluene/n-hexane, respectively, as an eluent to obtain Y-2 yield (in g / %) of the respective compounds of formula (I). (Compounds (I-1) + (I-1'), (I-2) + (I-2'), (I-3) + (I-3'), (I-4) + (I-4') and (I-5) + (I-5') are obtained as mixture of isomers, respectively.)**

| Compounds of formula (I) | Tetrachloroperylene W-1 | Bis-phenol W-2 (g / mmol) | K₂CO₃ W-3 | NMP V-1 | Reaction time T-1 | Crude yield Y-1 (g) | Yield (purified) Y-2 (g / %) | Exact mass [M+] | MS (ESI+) |
|---|---|---|---|---|---|---|---|---|---|
| | (g / mmol) | | (g) | (mL) | (h) | | | (a.u.) | (a.u.) |
| | **(E-1)** (mixture of isomers) | | | | | | | | |
| **(I-1) + (1-1')** | 0.67/1.0 | **(B-1),** 0.41 / 2.2 | 0.30 | 16 | 24 | 0.8 | 0.1 / 11.1 | 900.20 | 901.59 |
| **(I-2) + (I-2')** | 1.34 / 1.9 | **(B-2),** 1.30 / 4.4 | 0.60 | 40 | 48 | 2.1 | 0.4 / 18.0 | 1125.45 | 1126.24 |
| **(I-3) + (I-3')** | 1.60 12.4 | **(B-3),** 2.30 / 5.2 | 0.70 | 60 | 20 | 2.9 | 0.66 / 19.7 | 1412.65 | 1414.16 |
| **(I-4) + (I-4')** | 1.43/2.1 | **(B-4),** 1.00 / 4.7 | 0.65 | 38 | 72 | 1.5 | 0.08 / 3.9 | 956.26 | 957.95 |
| **(I-5) + (I-5')** | 1.52 / 2.3 | **(B-5),** 1.14 / 5.0 | 0.70 | 60 | 48 | 1.4 | 0.13 / 5.7 | 985.05 | 986.62 |

| | **(E-2)** | | | | | | | | |
|---|---|---|---|---|---|---|---|---|---|
| **(I-16)** | 0.43/0.6 | **(B-1),** 0.23 / 1.3 | 0.17 | 10 | 48 | 0.6 | 0.12 / 21.3 | 987.29 | 988.07 |
| **(I-17)** | 0.48 / 0.6 | **(B-3),** 0.61 / 1.4 | 0.19 | 16 | 48 | 0.9 | 0.11 / 11.1 | 1499.74 | 1502.18 |

| | **(E-3)** | | | | | | | | |
|---|---|---|---|---|---|---|---|---|---|
| **(I-43)** | 1.92/3.0 | **(B-3),** 2.93 / 6.6 | 0.91 | 70 | 48 | 4.9 | 0.48 / 11.6 | 1378.71 | 1380.07 |

### 7. Optical properties

**Table 2: Optical properties of selected (mixtures of) compounds of formula (I) in DCM. λₘₐₓ^{abs}= absorption maximum, ε = molar absorption coefficient, λₘₐₓ^{PL}= photoluminescence maximum, QY = quantum yield, * = first measurement, ** = second measurement (purified sample), BG ratio = maximum absorption in the blue spectral region (400-500 nm) divided by the maximum absorption in the green spectral region (550-650 nm)**

| Compounds of formula (I) | λₘₐₓ^{abs}, (nm) | ε, (M⁻¹ × cm⁻¹) | λₘₐₓ^{PL}, (nm) | QY, (%) | BG ratio |
|---|---|---|---|---|---|
| **Lumogen^{®} F Red 300** | 576 | 36000 | 609 | 66-90 | 0.37 |
| **(I-1) + (I-1')** | 607 | 30600 | 624 | 36* / 72** | 0.12 |
| **(I-2) + (I-2')** | 614 | 66000 | 637 | 82 | 0.14 |
| **(I-3) + (I-3')** | 616 | 67100 | 639 | 16* / 80** | 0.17 |
| **(I-16)** | 587 | 86700 | 612 | 83 | 0.20 |
| **(I-17)** | 600 | 56100 | 624 | 86 | 0.20 |
| **(I-43)** | 569 | 37200 | 586 | 31 | 0.31 |

## Claims

1. Compound of formula (I), 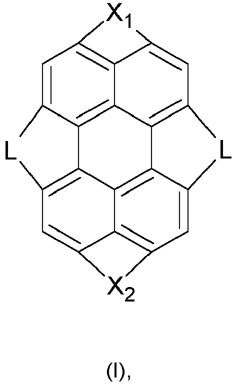 wherein
- X₁ and X₂ are independently selected from the group consisting of 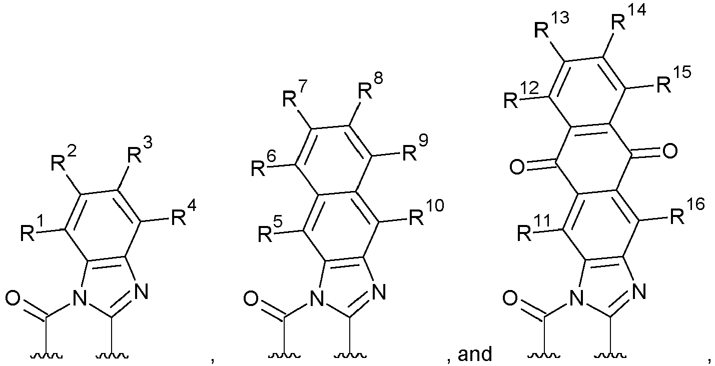 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues, and 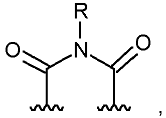 wherein R independently is selected from the group consisting of hydrogen, linear, cyclic, or branched alkyl with 1 to 24 carbon atoms, aryl, substituted aryl, heteroaryl, and substituted heteroaryl,
and
- L is selected from the group consisting of
(a) 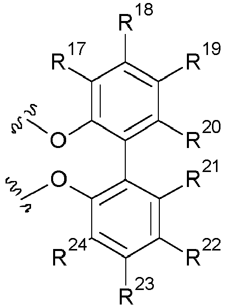 wherein R¹⁷ to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
or wherein R¹⁷ to R¹⁹ and R²² to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues, and R²⁰ and R²¹ are connected with one another by one or more bridging atoms,
(b) 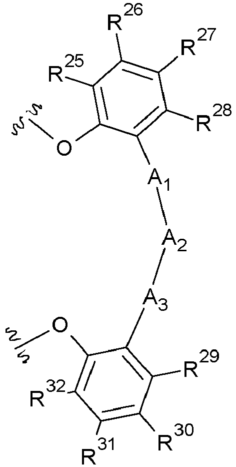 wherein R²⁵ to R³² are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
and one, two or three of A₁ to A₃ are present, wherein A₁ to As, if present, are independently selected from the group consisting of carbon, carbonyl, nitrogen, oxygen, sulfur, sulfoxide, and sulfone, wherein when any of A₁ to A₃ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, and/or wherein when A₁ and A₂ are present and A₃ is not present, A₁ and A₂ can optionally be carbon atoms that are part of a five or six membered ring system optionally comprising one or two oxygen atoms in said ring system, and/or wherein when A₁ to A₃ are present, A₁ to A₃ can optionally be carbon atoms that are part of a five or six membered ring system,
(c) 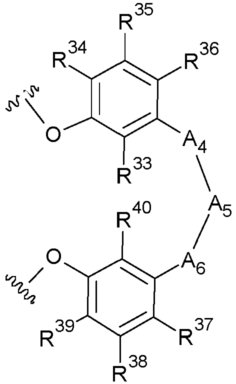 wherein R³³ to R⁴⁰ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues,
and one, two or three of A₄ to A₆ are present, wherein A₄ to A₆, if present, are independently selected from the group consisting of carbon, carbonyl, nitrogen, oxygen, sulfur, sulfoxide, and sulfone, wherein when any of A₄ to A₆ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl,
wherein when both of X₁ and X₂ are a 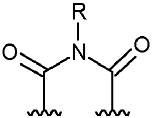 residue as defined, then L is not

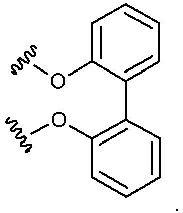

2. Mixture comprising or consisting of two or more compounds of formula (I) according to claim 1, wherein the mixture comprises compounds of formula (la) and (la') 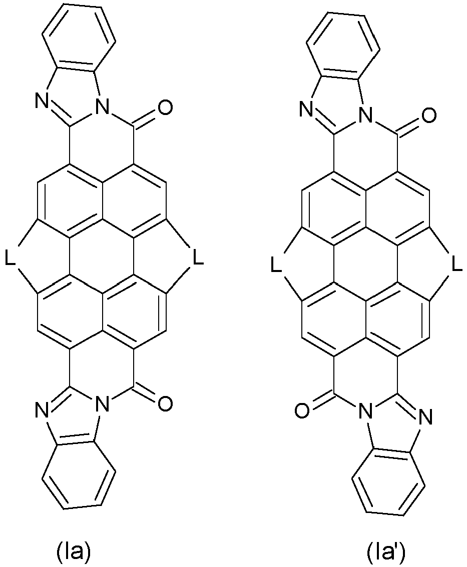 or wherein the mixture comprises compounds of formula (lb) and (lb') 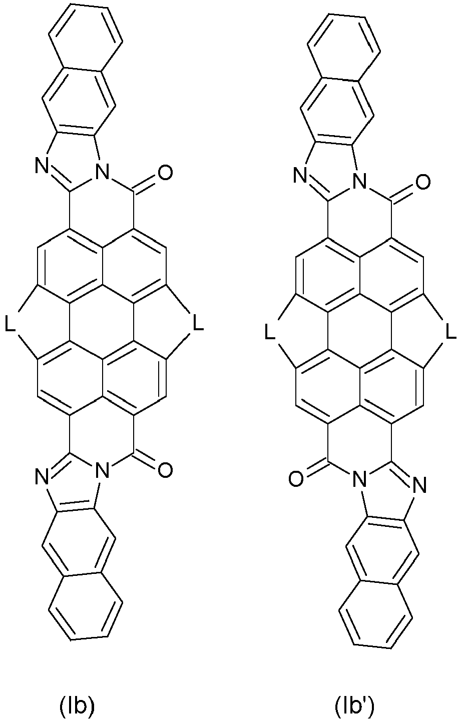 or wherein the mixture comprises compounds of formula (Ic) and (Ic') 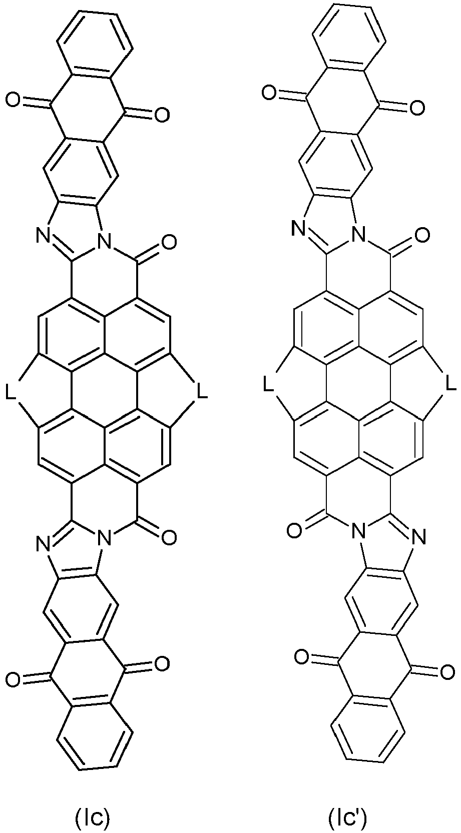 and wherein L is as defined in claim 1, respectively.

3. Compound of formula (I) according to claim 1, wherein the compound of formula (I) is a compound of formula (Id) 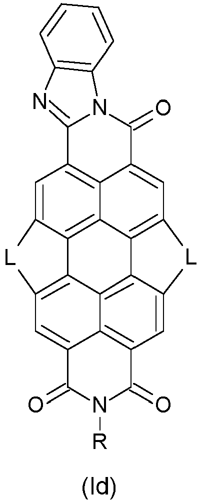 wherein R is selected from the group consisting of hydrogen, linear, cyclic, or branched alkyl with 1 to 24 carbon atoms, aryl, substituted aryl, heteroaryl, and substituted heteroaryl,
and wherein L is as defined in claim 1.

4. Compound of formula (I) according to any of the claims 1 to 3 or mixture of two, three or more compounds of formula (I) according to any of the claims 1 to 3, wherein the compound or mixture absorbs light in the wavelength range of from 400 to 650 nm, preferably from 500 to 650 nm, most preferably from 500 to 600 nm, and has a maximum of emission in the wavelength range of from 550 to 750 nm, preferably from 550 to 700 nm, most preferably from 600 to 700 nm.

5. Compound of formula (I) or mixture according to any of the claims 1 to 4, wherein the maximum absorption of said compound or mixture in the spectral region of from 400 to 500 nm divided by the maximum absorption of said compound or mixture in the spectral region of from 550 to 650 nm is equal to or less than 0.32.

6. Material comprising or consisting of
(i) one or more compound(s) of formula (I) or a mixture according to any of claims 1 to 5, and
(ii) one or more polymers selected from the group consisting of polyolefins, polystyrenes, polyethylenes, polyacrylates, polycarbonates, polyesters, polyurethanes, polyolefin copolymers, polyvinyl alcohols, polyvinyl esters, polyvinyl alkanals, polyvinyl ketals, polyamides, polyimides, polycarbonate blends, polyester blends, poly(meth)acrylates, poly(meth)acrylate-styrene copolymer blends, poly(meth)acrylate-polyvinylidenedifluoride blends, styrene copolymers, polyethers, polyetherketones, polysulfones, polyvinyl chloride, ethylene tetrafluoro ethylene (ETFE), ethylene co-polymers, preferably ethylene vinyl acetate and ethylene butyl acrylate, polyvinyl butyral, and ethylene vinyl alcohol (EVOH), and
(iii) optionally, one or more additives selected from the group consisting of plasticisers, UV absorbers, UV stabilisers, processing and slip agents, anti-drip additives, colourants, optical brighteners, antioxidants, light stabilisers, hindered amine light stabilisers, nickel quenchers, metal deactivators, reinforcing and filling materials, anti-condensation agents, biocides, acid scavengers, antistatic agents, IR absorbers, preferably for long-wavelength IR radiation, more preferably kaolin, antiblocking agents, preferably silicon dioxide, light scatterers, preferably selected from the group consisting of titanium dioxide, magnesium oxide, calcium carbonate, barium sulfate, boron nitride, SiOz particles, glass hollow spheres, silicone particles, and mica particles, and inorganic and organic reflectors.

7. Material according to claim 6, wherein the material is in the form of a film, foil, pane, fabric, sheet, panel, polymer laminate, woven polymer fabric roof cover, woven polymer fabric floor cover, net, particle, or screen, preferably is a sheet, panel or film.

8. Material according to claim 6 or 7, wherein the material comprises a total amount of from 0.001 to 5 wt.-%, preferably of from 0.01 to 1 wt.-%, more preferably of from 0.01 to 0.5 wt.-%, based on the total weight of the material, of the one or more compound(s) of formula (I).

9. Material according to any of the claims 6 to 8 or mixture comprising one, two, three, four, or more of the compounds of formula (I) according to any of the claims 1 to 5, which additionally comprises one or more further fluorescent dye(s) that are different from said compound(s) of formula (I).

10. Method for converting light comprising or consisting of the following step:
(i) Irradiating one or more compound(s) of formula (I) as defined in any of the claims 1 to 5 or a material or mixture as defined in any of the claims 6 to 9 with light of a wavelength in the range of from 350 to 750 nm, preferably of from 400 to 700 nm, more preferably of 500 to 600 nm.

11. Method for producing one or more compound(s) of formula (I) as defined in claim 1 or 2, wherein the method comprises or consists of the following steps:
(a) Optionally, providing or producing a compound of formula (II) 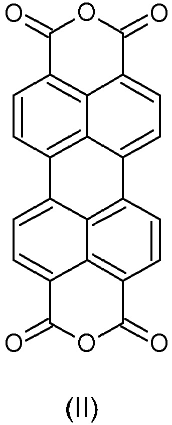
(b) optionally, chlorination of the compound of formula (II) provided or produced in step (a), if present, with a chlorination agent to obtain a compound of formula (III),
or
providing a compound of formula (III) 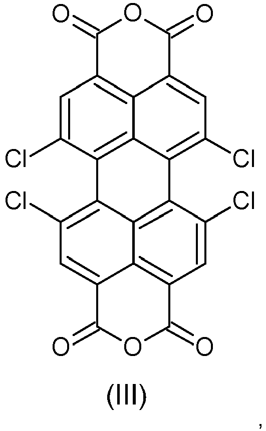
(c) reacting the compound of formula (III) obtained or provided in step (b) with a diamine selected from the group consisting of 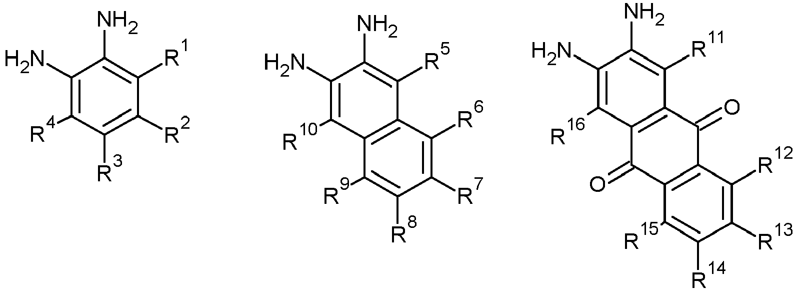 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues,
to obtain one or more compound(s) of formula (IV) 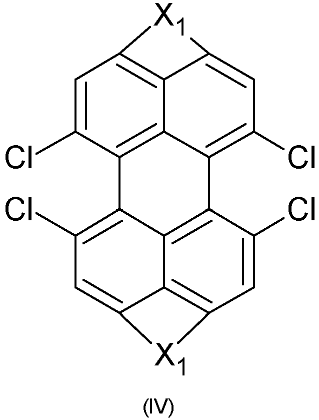 wherein X₁ is selected from the group consisting of 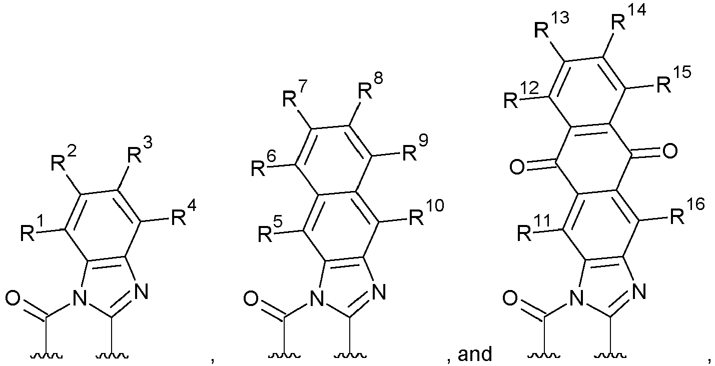 and wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues,
(d) reacting the one or more compound(s) of formula (IV) obtained in step (c) with 2,2'-biphenol or a derivative thereof, preferably selected from the group consisting of
(i) 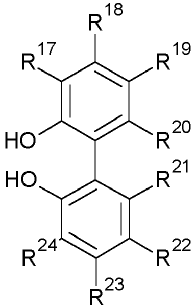 wherein R¹⁷ to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
or wherein R¹⁷ to R¹⁹ and R²² to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues, and R²⁰ and R²¹ are connected with one another by one or more bridging atoms,
(ii) 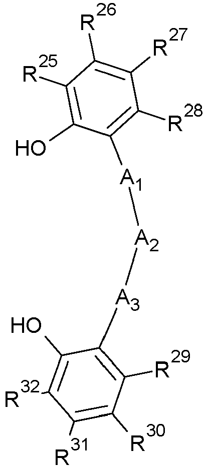 wherein R²⁵ to R³² are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
and one, two or three of A₁ to A₃ are present, wherein A₁ to As, if present, are independently selected from the group consisting of carbon, carbonyl, nitrogen, oxygen, sulfur, sulfoxide, and sulfone, wherein when any of A₁ to A₃ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, and/or wherein when A₁ and A₂ are present and A₃ is not present, A₁ and A₂ can optionally be carbon atoms that are part of a five or six membered ring system optionally comprising one or two oxygen atoms in said ring system, and/or wherein when A₁ to A₃ are present, A₁ to A₃ can optionally be carbon atoms that are part of a five or six membered ring system,
(iii) 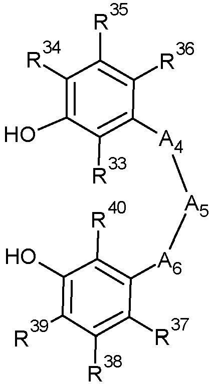 wherein R³³ to R⁴⁰ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues, preferably wherein R³³ and R⁴⁰ are hydrogen residues,
and one, two or three of A₄ to A₆ are present, wherein A₄ to A₆, if present, are independently selected from the group consisting of carbon, carbonyl, nitrogen, oxygen, sulfur, sulfoxide, and sulfone, wherein when any of A₄ to A₆ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl,
and optionally
(e) purification of the product(s) obtained in step (d).

12. Method for producing one or more compound(s) of formula (I) as defined in claim 1 or 3, wherein the method comprises or consists of the following steps:
(a) Optionally, providing or producing a compound of formula (II) 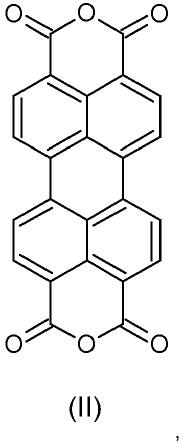
(b) optionally, chlorination of the compound of formula (II) provided or produced in step (a), if present, with a chlorination agent to obtain a compound of formula (III),
or
providing a compound of formula (III) 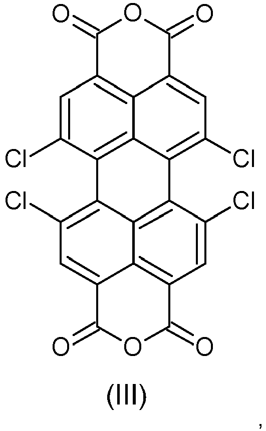
(c) reacting the compound of formula (III) obtained or provided in step (b) with a diamine selected from the group consisting of 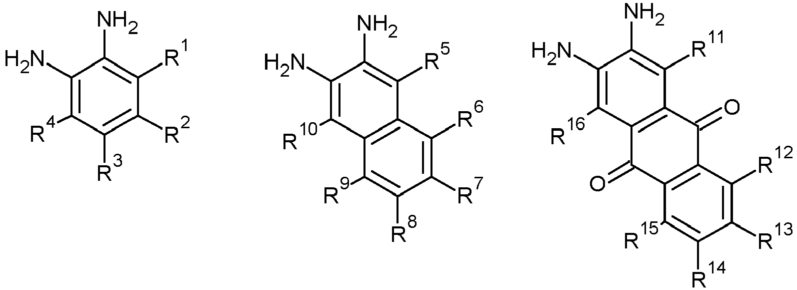 wherein R¹ to R¹⁶ are independently selected from the group consisting of hydrogen, linear or branched C1-C18-alkyl, C3-C8-cycloalkyl, C3-C8-cycloalkyl substituted by 1, 2 or 3 C1-C18-alkyl residues, C6-C10-aryl, C6-C10-aryl substituted by 1, 2 or 3 C1-C12-alkyl residues, and linear, branched or cyclic C1-C18 alkoxy residues,
preferably wherein the molar ratio of the compound of formula (III) to the diamine at the start of the reaction is about 1 : 0.9-1.1,
(d) reacting the product of step (c) with an amine, preferably wherein the amine is selected from the group consisting of ammonia, linear, cyclic, or branched alkylamine with 1 to 24 carbon atoms, arylamine, substituted arylamine, heteroarylamine, and substituted heteroarylamine,
(e) reacting the product of step (d) with 2,2'-biphenol or a derivative thereof, preferably selected from the group consisting of
(i) 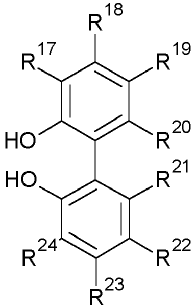 wherein R¹⁷ to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
or wherein R¹⁷ to R¹⁹ and R²² to R²⁴ are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues, and R²⁰ and R²¹ are connected with one another by one or more bridging atoms,
(ii) 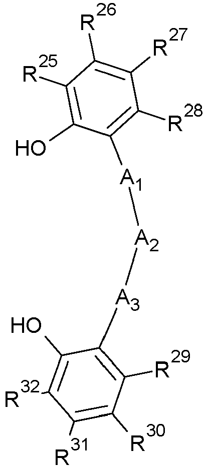 wherein R²⁵ to R³² are independently selected from the group consisting of hydrogen, linear, cyclic, or branched alkyl with 1 to 24 carbon atoms, linear, cyclic, or branched C1-C18 alkoxy, linear, cyclic, or branched C1-C18 alkoxyaryl, aryl, substituted aryl, heteroaryl, and substituted heteroaryl residues,
and one, two or three of A₁ to A₃ are present, wherein A₁ to As, if present, are independently selected from the group consisting of carbon, carbonyl, nitrogen, oxygen, sulfur, sulfoxide, and sulfone, wherein when any of A₁ to A₃ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl, and/or wherein when A₁ and A₂ are present and A₃ is not present, A₁ and A₂ can optionally be carbon atoms that are part of a five or six membered ring system optionally comprising one or two oxygen atoms in said ring system, and/or wherein when A₁ to A₃ are present, A₁ to A₃ can optionally be carbon atoms that are part of a five or six membered ring system,
(iii) 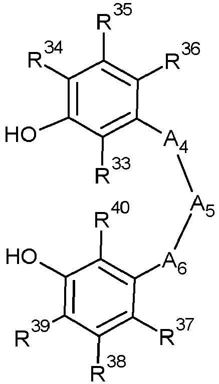 wherein R³³ to R⁴⁰ are independently selected from the group consisting of hydrogen, linear, cyclic, or branched alkyl with 1 to 24 carbon atoms, linear, cyclic, or branched C1-C18 alkoxy, aryl, substituted aryl, heteroaryl, and substituted heteroaryl residues, preferably wherein R³³ and R⁴⁰ are hydrogen residues,
and one, two or three of A₄ to A₆ are present, wherein A₄ to A₆, if present, are independently selected from the group consisting of carbon, carbonyl, nitrogen, oxygen, sulfur, sulfoxide, and sulfone, wherein when any of A₄ to A₆ is/are carbon or nitrogen atom(s), it/they can optionally be substituted by one or more residues independently selected from the group consisting of hydrogen, linear, cyclic, or branched alkyl with 1 to 24 carbon atoms, aryl, substituted aryl, heteroaryl, and substituted heteroaryl,
and optionally
(f) purification of the product(s) obtained from step (e).

13. Method according to claim 11 or 12, wherein the chlorination agent reacted in step (b), if present, is selected from the group consisting of Cl₃CCN, Cl₂, N-chlorosuccinimide, SbCl₅, SO₂Cl₂, and ClSO₃H.

14. Use of one or more compound(s) of formula (I) as defined in any of claims 1 to 5 or of a material or mixture as defined in any of claims 6 to 9 as a light converter, preferably in the field of horticulture, agriculture, photovoltaics, displays, lighting, bio-imaging, bio-sensing, signage, preferably road signs, security, anti-counterfeiting, optical sensors, and the colouration of plastics.

15. Use according to claim 14, wherein the compound or material or mixture absorbs light in the wavelength range of from 400 to 650 nm, preferably from 500 to 650 nm, most preferably from 500 to 600 nm, and emits light in the wavelength range of from 550 to 750 nm, preferably from 550 to 700 nm, most preferably from 600 to 700 nm.
